# EUROPEAN PATENT APPLICATION

(11) **EP 4 803 908 A1**
(43) Date of publication of application: **09.09.2026**
(21) Application number: 26161710.4
(22) Date of filing: 02.03.2026
(51) Int. Cl.: G01N 35/04, G01N 35/02

(54) **AUTOMATIC ANALYZING APPARATUS**

(30) Priority: 03.03.2025 JP 2025033170
(71) Applicant: Canon Medical Systems Corporation, Tochigi (JP)
(72) Inventor: YAMAMOTO, Tetsushi, Otawara-shi (JP); MURATA, Tatsuya, Otawara-shi (JP); KODAMA, Kiwamu, Otawara-shi (JP); SAITOU, Masaaki, Otawara-shi (JP); HASHIMOTO, Shozo, Otawara-shi (JP); TAKAYAMA, Hiroko, Otawara-shi (JP); KINPARA, Takeshi, Otawara-shi (JP)
(74) Representative: Marks & Clerk LLP

(57) **Abstract**

An automatic analyzing apparatus according to an embodiment includes an installation table and a transporter. The installation table is for installing a specimen rack that holds a specimen container for containing a specimen and a reagent container for containing a reagent used for measurement. The transporter holds and transports the specimen rack or the reagent container installed in the installation table. The installation table includes a restrictor that restricts an installation position of an object installed on the installation table when a type of the object is a predetermined type including at least one of the specimen rack and the reagent container.

## Description

### CROSS REFERENCE TO RELATED APPLICATIONS

This application is based upon and claims the benefit of priority from the prior Japanese Patent Application No. 2025-033170, filed on March 3, 2025, the entire contents of which are incorporated herein by reference.

### FIELD

Embodiments described in the present specification and drawings relate to an automatic analyzing apparatus.

### BACKGROUND

An automatic analyzing apparatus is an apparatus that optically measures, for example, a reaction liquid obtained by mixing a sample such as a test sample collected from a subject such as blood or a standard sample of each measurement item with a reagent corresponding to each measurement item to analyze a component of the test sample corresponding to each measurement item.

In the related art, there is an automatic analyzing apparatus including an installation table configured to install a sample rack holding a sample container for containing a sample and a reagent container for containing a reagent used for measurement, and a transporter configured to hold the sample rack or the reagent container installed in the installation table to transport the sample rack or the reagent container to a predetermined position in the apparatus. The reagent container transported by such a transporter is a reagent container that contains a first reagent and a second reagent, and is a reagent manufacturer dedicated container corresponding to an automatic analyzing apparatus.

The automatic analyzing apparatus having the transporter as described above is advantageous for the user in terms of reducing the labor of the user for reagent replacement. On the other hand, while only the reagent manufacturer dedicated container can be installed, the present inventors have found that such an automatic analyzing apparatus is disadvantageous from the viewpoint of cost of a reagent and compatibility with various reagents. Then, the present inventors have considered that usability and reduction of reagent cost or improvement of reagent compatibility are compatible by transporting a general-purpose reagent container to a reagent storage by the transporter.

Then, the present inventors have considered that, in an automatic analyzing apparatus including a transporter that transports a sample rack or a general-purpose reagent container as a reagent container, in order to enable a large number of sample racks or reagent bottles to be installed at a time in an installation table and to make an apparatus size compact, each of a plurality of slots in the installation table may be configured to enable the sample rack and the reagent container to be installed. However, the present inventors have found that when such a configuration is adopted, if the sample rack and the reagent container are different in size, there is room for improvement in the following points when the transporter holds (picks up) the sample rack or the reagent container installed in the installation table.

For example, if the shape of the sample rack and the shape of the reagent container are made uniform so that the transporter can easily hold the sample rack and the reagent container, the size of the reagent container increases, and thus, the size of an automatic loading mechanism for the reagent bottle and the size of the reagent storage also increase, and as a result, the size of the automatic analyzing apparatus increases. In addition, for example, if a specification is adopted in which the sample rack and the reagent bottle in the installation table are installed so as to be aligned with the transporter side so that the transporter can easily hold the reagent container without changing the size of the reagent container, it is difficult for the user to remove the reagent container from the installation table in a case where the reagent container is installed between the sample racks or the like.

### SUMMARY OF INVENTION

An automatic analyzing apparatus comprising:
an installation table configured to install a specimen rack and a reagent container, the specimen rack holding a specimen container for containing a specimen and the reagent container containing a reagent used for measurement; and
a transporter configured to hold and transport the specimen rack or the reagent container installed in the installation table,
wherein the installation table includes a restrictor that restricts an installation position of an object installed on the installation table when a type of the object is a predetermined type including at least one of the specimen rack and the reagent container.

The predetermined type may be the reagent container, and/or
the restrictor may restrict an installation position of the reagent container when the reagent container is installed in the installation table.

The restrictor may not restrict an installation position of the specimen rack when the specimen rack is installed in the installation table.

The specimen rack in which a cutout is formed may be installed in the installation table.

The specimen rack installed in the installation table may be either a first specimen rack or a second specimen rack, the second specimen rack being smaller in size than the first specimen rack,
the predetermined type may include the reagent container and the second specimen rack, and/or
the restrictor may restrict an installation position of the reagent container and an installation position of the second specimen rack when the reagent container and the second specimen rack are installed in the installation table.

The installation table may include a tray having a plurality of slots for receiving the specimen rack and the reagent container and a wall for partitioning adjacent slots, and/or
the restrictor may be provided on the wall.

In the installation table, the specimen rack and the reagent container may be installed so as to be aligned with a user side of the tray.

An automatic analyzing apparatus comprising:
an installation table configured to install a specimen rack and a reagent container, the specimen rack holding a specimen container for containing a specimen and the reagent container containing a reagent used for measurement;
a position adjuster configured to adjust a position of the specimen rack or the reagent container installed in the installation table to a predetermined position; and
a detection sensor configured to detect the specimen rack or the reagent container installed in the installation table; and
processing circuitry configured to control the position adjuster based on a detection result of the detection sensor.

An automatic analyzing apparatus comprising:
an installation table configured to install a specimen rack and a reagent container, the specimen rack holding a specimen container for containing a specimen and the reagent container containing a reagent used for measurement;
a transporter configured to hold and transport the specimen rack or the reagent container installed in the installation table; and
a position detector configured to be installed in the installation table and detect an installation position of the specimen rack or the reagent container installed in the installation table.

The automatic analyzing apparatus may comprise a processing circuitry configured to acquire a detection result of the position detector, and control the transporter based on a detection result of the position detector.

The position detector may detect an installation position of the specimen rack or the reagent container installed in the installation table by measuring a distance to the specimen rack or the reagent container installed in the installation table.

The position detector may detect the installation position of the specimen rack or the reagent container installed in the installation table by detecting a pressure caused by installing the specimen rack or the reagent container in the installation table.

The automatic analyzing apparatus may comprise a reader configured to read rack identification information assigned to the specimen rack and reagent container identification information assigned to the reagent container; and/or
processing circuitry configured to identify which one of the specimen rack and the reagent container is installed in the installation table based on a reading result of the reader.

The automatic analyzing apparatus may comprise an input interface configured to receive an input of information on the specimen rack or the reagent container from the user, and/or
processing circuitry configured to identify which one of the specimen rack and the reagent container is installed in the installation table based on information on the specimen rack or the reagent container that has received the input from the user via the input interface.

The automatic analyzing apparatus may comprise a first sensor configured to detect installation of the specimen rack in a first tray for installing the specimen rack included in the installation table;
a second sensor configured to detect installation of a reagent container in a second tray for installing the reagent container included in the installation table; and
processing circuitry configured to identify which one of the specimen rack and the reagent container is installed in the installation table based on a detection result of the first sensor or a detection result of the second sensor.

### BRIEF DESCRIPTION OF THE DRAWINGS

FIG. 1 is a block diagram illustrating an example of a functional configuration of an automatic analyzing apparatus according to a first embodiment.
FIG. 2 is a schematic diagram illustrating an example of a configuration of an analysis mechanism according to the first embodiment.
FIG. 3 is a diagram of an installation table in the first embodiment as viewed from above.
FIG. 4 is a diagram illustrating an example of an installation mode of a sample rack and a reagent container when the installation table in the first embodiment is viewed from a user side.
FIG. 5 is a diagram illustrating an example of an installation mode of a sample rack and a reagent container when the installation table in the first embodiment is viewed from an apparatus side.
FIG. 6 is a diagram illustrating an example of a configuration of the sample rack according to the first embodiment.
FIG. 7 is a diagram of an installation table according to a first modification as viewed from above.
FIG. 8 is a block diagram illustrating an example of a functional configuration of an automatic analyzing apparatus according to a second embodiment.
FIG. 9 is a schematic diagram illustrating an example of a configuration of an analysis mechanism according to the second embodiment.
FIG. 10 is a diagram of an installation table in the second embodiment as viewed from above.
FIG. 11 is a diagram illustrating an example of an installation mode of a sample rack and a reagent container when the installation table in the second embodiment is viewed from a user side.
FIG. 12 is a diagram illustrating an example of an installation mode of a sample rack and a reagent container when the installation table in the second embodiment is viewed from an apparatus side.
FIG. 13 is a diagram illustrating an example of a configuration of the sample rack according to the second embodiment.
FIG. 14 is a diagram illustrating an example of a configuration of a position adjuster according to the second embodiment.
FIG. 15 is a flowchart for explaining position adjustment processing executed in the automatic analyzing apparatus according to the second embodiment.
FIG. 16 is a diagram for explaining an installation mode of the sample rack and the reagent container in the installation table after position adjustment by the position adjuster in the second embodiment.
FIG. 17 is a diagram illustrating an example of a configuration of a position adjuster according to a second modification.
FIG. 18 is a diagram illustrating an example of an operation of a position adjuster according to the second modification.
FIG. 19 is a block diagram illustrating an example of a functional configuration of an automatic analyzing apparatus according to a third embodiment.
FIG. 20 is a diagram illustrating an example of a configuration of an analysis mechanism according to the third embodiment.
FIG. 21 is a diagram of an installation table in the third embodiment as viewed from above.
FIG. 22 is a diagram illustrating an example of an installation mode of a sample rack and a reagent container when the installation table in the third embodiment is viewed from a user side.
FIG. 23 is a diagram illustrating an example of an installation mode of a sample rack and a reagent container when the installation table in the third embodiment is viewed from an apparatus side.
FIG. 24 is a diagram illustrating an example of a configuration of an analysis mechanism according to a third modification.
FIG. 25 is a block diagram illustrating an example of a functional configuration of an automatic analyzing apparatus according to a fourth embodiment.
FIG. 26 is a diagram illustrating an example of a configuration of an analysis mechanism according to the fourth embodiment.
FIG. 27A is a diagram of a positional relationship between a reader, a holding arm in the transporter, and the sample rack as viewed from above.
FIG. 27B is a diagram of a positional relationship between the reader, the holding arm in the transporter, and the sample rack as viewed from the side.
FIG. 28 is a block diagram illustrating an example of a functional configuration of an automatic analyzing apparatus according to a fifth embodiment.
FIG. 29 is a schematic diagram illustrating an example of a configuration of an analysis mechanism according to the fifth embodiment.
FIG. 30 is a diagram of an installation table in the fifth embodiment as viewed from above.

### DETAILED DESCRIPTION OF THE INVENTION

Hereinafter, respective embodiments of the automatic analyzing apparatus will be described with reference to the accompanying drawings. In the embodiments below, the same reference signs are given for identical components in terms of configuration and function, and duplicate description is omitted.

### [First Embodiment]

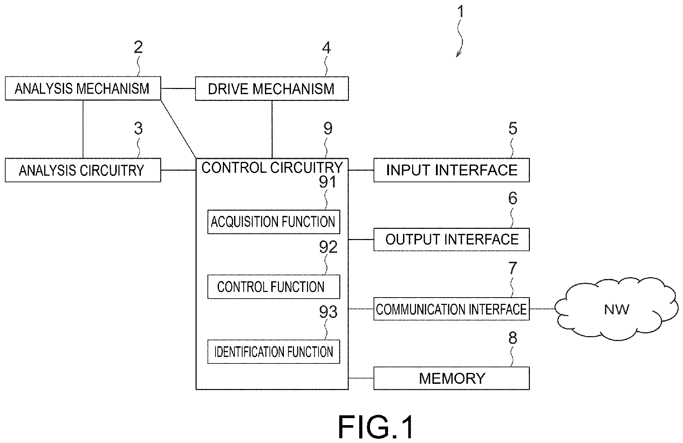

FIG. 1 is a block diagram illustrating an example of a functional configuration of an automatic analyzing apparatus according to a first embodiment. An automatic analyzing apparatus 1 illustrated in FIG. 1 includes an analysis mechanism 2, analysis circuitry 3, a drive mechanism 4, an input interface 5, an output interface 6, a communication interface 7, a memory 8, and control circuitry 9.

The analysis mechanism 2 adds a reagent corresponding to a measurement item of a sample such as a standard sample or a test sample to the sample. The analysis mechanism 2 measures a mixed solution obtained by adding a reagent to a sample to generate, for example, standard data and test data. In the present embodiment, the standard data represents a measurement result such as absorbance for a standard sample whose concentration of a detection target is known. The test data represents a measurement result of absorbance or the like of the test sample. Note that, in the following description, in a case where the standard sample and the test sample are expressed without distinction, these samples may be simply referred to as a "sample". The sample is an example of a specimen in the present embodiment.

The analysis circuitry 3 is a processor that analyzes the standard data and the test data generated by the analysis mechanism 2 and generates calibration data, analysis data, and the like. The analysis circuitry 3 reads the analysis program from the memory 8, and generates calibration data, analysis data, and the like according to the read analysis program. For example, the analysis circuitry 3 generates standard data and calibration data indicating a relationship with a standard value set in advance for a standard sample based on the standard data. In addition, the analysis circuitry 3 generates analysis data represented as a concentration value and an enzyme activity value based on the test data and the calibration data of the test item corresponding to the test data. The analysis circuitry 3 outputs the generated calibration data, analysis data, and the like to the control circuitry 9.

The drive mechanism 4 drives the analysis mechanism 2 under the control of the control circuitry 9. The drive mechanism 4 is implemented by, for example, a gear, a stepping motor, a belt transporter, a lead screw, and the like.

The input interface 5 receives, for example, setting of an analysis parameter or the like of each measurement item related to the sample requested to be measured. The input interface 5 is implemented by, for example, a mouse, a keyboard, a touch pad to which an instruction is input by touching the operation surface, and the like. The input interface 5 is connected to the control circuitry 9, converts an operation instruction input from the user into an electric signal, and outputs the electric signal to the control circuitry 9. The input interface 5 according to the present embodiment receives an input of information on a sample rack 21 or a reagent container 23 from the user. Note that, in the present embodiment, the input interface 5 is not limited to the interface including physical operation components such as a mouse, a keyboard, and the like. For example, also electric signal processing circuitry that receives an electric signal corresponding to an operation instruction input from an external input device provided separately from the automatic analyzing apparatus 1 and outputs the electric signal to the control circuitry 9 is included in examples of the input interface 5. The input interface 5 corresponds to an input interface in the present embodiment.

The output interface 6 is connected to the control circuitry 9 and outputs the signal supplied from the control circuitry 9. The output interface 6 is realized by, for example, display circuitry, print circuitry, an audio device, and the like. Examples of the display circuitry include a CRT (cathode ray tube) display, a liquid crystal display, an organic EL (electro luminescence) display, an LED display, and a plasma display. The display circuitry corresponds to a display unit according to the present embodiment. Note that the display circuitry also includes processing circuitry that converts data representing a display target into a video signal and outputs the video signal to the outside. The print circuitry includes, for example, a printer. Note that an output circuitry that outputs data representing a printing target to the outside is also included in the print circuitry. The audio device includes, for example, a speaker. Note that an output circuitry that outputs an audio signal to the outside is also included in the audio device.

The communication interface 7 is connected to, for example, the in-hospital network NW, and connects the automatic analyzing apparatus 1 to the in-hospital network NW. The communication interface 7 performs data communication with a hospital information system (HIS) via the in-hospital network NW. Note that the communication interface 7 may perform data communication with the HIS via a laboratory information system (LIS) connected to the in-hospital network NW.

The memory 8 includes a magnetic or optical recording medium, a recording medium readable by a processor such as a semiconductor memory, or the like. The memory 8 stores an analysis program executed by the analysis circuitry 3 and a control program executed by the control circuitry 9. In addition, the memory 8 stores the analysis data generated by the analysis circuitry 3 for each measurement item. The memory 8 according to the present embodiment stores position information. The position information includes first position information on the position where the sample rack 21 is held and second position information on the position where the reagent container 23 is held. Note that the memory 8 need not necessarily be implemented by a single storage device. For example, the memory 8 can be implemented by a plurality of storage devices.

The control circuitry 9 is a processor that functions as a center of the automatic analyzing apparatus 1. The control circuitry 9 is an example of the processing circuitry. The control circuitry 9 realizes a function corresponding to the operation program by executing the operation program stored in the memory 8. Note that the control circuitry 9 may include a storage area that stores at least part of the data stored in the memory 8.

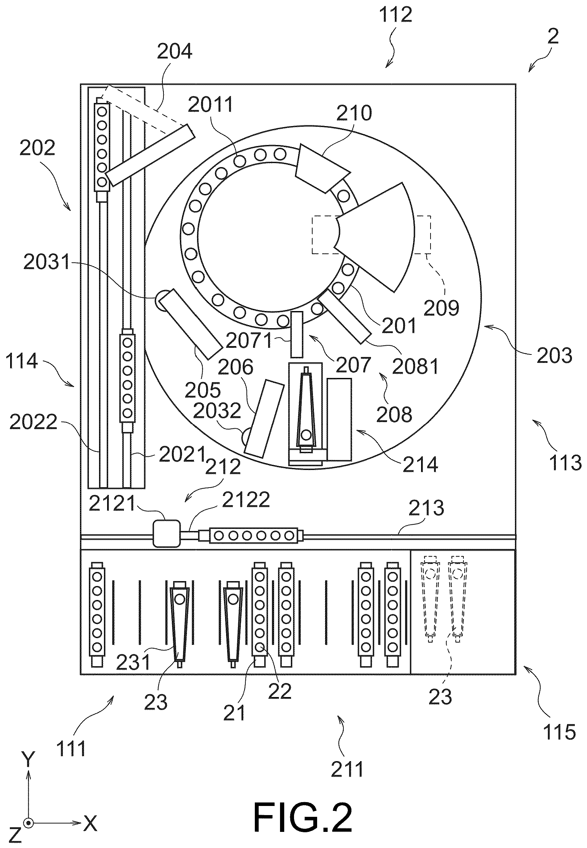

FIG. 2 is a schematic diagram illustrating an example of a configuration of an analysis mechanism 2 according to the first embodiment. In FIG. 2, a first side surface 111, a second side surface 112, a third side surface 113, and a fourth side surface 114 define an outer boundary of the analysis mechanism 2. The first side surface 111 and the second side surface 112 face each other, and the third side surface 113 and the fourth side surface 114 face each other. The first side surface 111 can be referred to as a surface assumed to face a user who uses the automatic analyzing apparatus 1, that is, a "front surface" of the analysis mechanism 2. The second side surface 112, the third side surface 113, and the fourth side surface 114 can be referred to as a "back surface", a "right side surface", and a "left side surface", respectively. The first side surface 111 side can be referred to as "near side", and the second side surface 112 side can be referred to as "far side". In the following description, a direction from the fourth side surface 114 side toward the third side surface 113 side is referred to as an X direction, a direction from the first side surface 111 side toward the second side surface 112 side is referred to as a Y direction, and a vertically upward direction is referred to as a Z direction.

As illustrated in FIG. 2, the analysis mechanism 2 according to the present embodiment includes, for example, a reaction disk 201, a rack sampler 202, a reagent storage 203, a sample dispensing arm 204, a first reagent dispensing arm 205, a second reagent dispensing arm 206, a first stirring unit 207, a second stirring unit 208, a photometric unit 209, a cleaning unit 210, an installation table 211, a transporter 212, a transporter track 213, and a reagent container transporter 214.

The reaction disk 201 supports a plurality of reaction containers 2011 arranged in an annular shape at predetermined intervals. The reaction disk 201 transports the plurality of reaction containers 2011 along a predetermined path. Specifically, during the analysis operation of the reaction liquid of the sample and the reagent, the reaction disk 201 is alternately rotated and stopped at predetermined time intervals by the drive mechanism 4. The reaction disk 201 is disposed above the reagent storage 203 in a spaced apart manner. At least a part of the installation range of the reaction disk 201 overlaps the installation range of the reagent storage 203. The reaction disk 201 and the reagent storage 203 may be arranged adjacent to each other, for example, on the same plane. The reaction container 2011 is formed of, for example, glass, polypropylene (PP), or acrylic.

The rack sampler 202 movably supports the sample rack 21 that holds a sample container 22 for holding a sample, and a sample requested to be measured is contained in the plurality of sample containers 22. In the example illustrated in FIG. 2, the sample rack 21 capable of holding six sample containers 22 in parallel is illustrated. First additional information is attached to the sample rack 21. The first additional information is, for example, rack identification information. Hereinafter, an embodiment will be described below with an example in which the first additional information is rack identification information. The rack identification information is information for identifying the sample rack 21. The rack identification information can be configured by, for example, a barcode. The rack identification information is configured by a barcode, but is not limited thereto. That is, the configuration of the rack identification information is optional, and may be, for example, an optional pixel code such as a one-dimensional pixel code and a two-dimensional pixel code, an IC tag using radio frequency identification (RFID), or the like. The sample container 22 is an example of a specimen container in the present embodiment. The sample rack 21 is an example of a specimen rack in the present embodiment.

As illustrated in FIG. 2, the rack sampler 202 includes a first track portion 2021 and a second track portion 2022 extending from the first side surface 111 side to the second side surface 112 side, that is, in the Y direction. The first track portion 2021 and the second track portion 2022 include, for example, a belt, a chain, and the like. The first track portion 2021 and the second track portion 2022 are independently driven.

Each of the first track portion 2021 and the second track portion 2022 causes the drive mechanism 4 to move the sample rack 21 from a loading position where the sample rack 21 is loaded to a sampling position for sucking the sample contained in the sample container 22 held by the sample rack 21. In addition, each of the first track portion 2021 and the second track portion 2022 causes the drive mechanism 4 to move the sample rack 21, which has been sampled, from the sampling position to a collecting position where the sample rack 21 is collected. In the example illustrated in FIG. 2, the loading position and the collecting position are the same position.

Here, the loading position and the collecting position are provided at positions where a rotation trajectory of a holding arm 2122 of the transporter 212 and a movement trajectory of the sample rack 21 moved by each of the first track portion 2021 and the second track portion intersect. In addition, the sampling position is provided, for example, at a position where the rotation trajectory of a sample dispensing probe of the sample dispensing arm 204 and the movement trajectory of an opening of the sample container 22 held by the sample rack 21 moved by each of the first track portion 2021 and the second track portion 2022 intersect.

The reagent storage 203 refrigerates a plurality of reagent containers containing reagents used for measurement. Specifically, the reagent storage 203 refrigerates a plurality of reagent containers 23 such as a reagent container 23 containing a first reagent that reacts with a predetermined component included in a standard sample or a predetermined component included in a test sample and a reagent container 23 containing a second reagent paired with a first reagent of two reagent systems. The first reagent may be, for example, a buffer solution containing bovine serum albumin (BSA) or the like. The second reagent may be a solution containing a predetermined antigen or antibody contained in the sample and an insoluble carrier, for example, a carrier particle on which an antigen or antibody bound or separated by a specific antigen-antibody reaction is immobilized. An enzyme, a substrate, an aptamer, or a receptor may be bound or separated by a specific reaction. In the reagent storage 203, a reagent rack is rotatably provided. The reagent rack holds a plurality of the reagent containers 23 arranged in an annular shape. The reagent rack is rotated by the drive mechanism 4.

Second additional information is attached to the reagent container 23. The second additional information is, for example, reagent container identification information. Hereinafter, an embodiment will be described below with an example in which the second additional information is reagent container identification information. The reagent container identification information is information for identifying the reagent container 23. The reagent container identification information can be configured by, for example, a barcode. The reagent container identification information is configured by a barcode, but is not limited thereto. That is, the reagent container identification information may have any configuration. For example, the reagent container identification information may have any pixel code such as a one-dimensional pixel code and a two-dimensional pixel code.

The sample dispensing arm 204 is provided between the reaction disk 201 and the rack sampler 202. The sample dispensing arm 204 is provided to be movable up and down in the vertical direction and to be rotatable in the horizontal direction by the drive mechanism 4. The sample dispensing arm 204 holds the sample dispensing probe at one end.

The sample dispensing probe rotates along an arc-shaped rotation trajectory as the sample dispensing arm 204 rotates. The sampling position for sucking a sample from the sample container 22 held by the rack sampler 202 is provided on the rotation trajectory. Furthermore, a sample discharge position for discharging the sample sucked by the sample dispensing probe to the reaction container 2011 held in the reaction disk 201 is provided on the rotation trajectory of the sample dispensing probe. The sample discharge position is provided at a position where the rotation trajectory of the sample dispensing probe and the movement trajectory of the reaction container 2011 held by the reaction disk 201 intersect.

The sample dispensing probe is driven by the drive mechanism 4 and moves in the vertical direction at the sampling position or the sample discharge position. In addition, the sample dispensing probe sucks a sample from the sample container 22 held by the sample rack 21 at the sampling position according to the control of the control circuitry 9. In accordance with the control of the control circuitry 9, the sample dispensing probe discharges the sucked sample to the reaction container 2011 located immediately below the sample discharge position.

The first reagent dispensing arm 205 is provided in the vicinity of a reagent rack of the reagent storage 203. The first reagent dispensing arm 205 is provided to be movable up and down in the vertical direction (Z direction) and to be rotatable in the horizontal direction (XY in-plane direction) by the drive mechanism 4. The first reagent dispensing arm 205 holds a first reagent dispensing probe at one end.

The first reagent dispensing probe rotates along an arc-shaped rotation trajectory as the first reagent dispensing arm 205 rotates. A first reagent suction position is provided on this rotation trajectory. The first reagent suction position is provided, for example, at a position where the rotation trajectory of the first reagent dispensing probe and the movement trajectory of the opening of the reagent container 23 containing the first reagent arranged in an annular shape in the reagent rack of the reagent storage 203 intersect. As illustrated in FIG. 2, a first insertion hole 2031 is provided in the upper surface of the reagent storage 203 corresponding to the first reagent suction position.

Furthermore, a first reagent discharge position for discharging the reagent sucked by the first reagent dispensing probe to the reaction container 2011 is set on the rotation trajectory of the first reagent dispensing probe. The first reagent discharge position is provided at a position where the rotation trajectory of the first reagent dispensing probe and the movement trajectory of the reaction container 2011 held by the reaction disk 201 intersect.

The first reagent dispensing probe is driven by the drive mechanism 4 and moves in the vertical direction at the first reagent suction position or the first reagent discharge position on the rotation trajectory. Under the control of the control circuitry 9, the first reagent dispensing probe sucks the reagent from the reagent container 23 which is held in the reagent rack and located immediately below the first reagent suction position via the first insertion hole 2031. In accordance with the control of the control circuitry 9, the first reagent dispensing probe discharges the sucked reagent to the reaction container 2011 located immediately below the first reagent discharge position. The reagent sucked by the first reagent dispensing probe according to the present embodiment is, for example, a first reagent. Note that the first reagent dispensing probe according to the present embodiment sucks the first reagent, but the target to be sucked by the first reagent dispensing probe is not limited thereto. That is, the target to be sucked by the first reagent dispensing probe is optional, and when the reagent container 23 containing the second reagent or the standard sample container containing the standard sample is installed in the reagent rack, the second reagent or the standard sample may be sucked and discharged to the reaction container 2011.

The second reagent dispensing arm 206 is provided in the vicinity of a reagent rack of the reagent storage 203. The second reagent dispensing arm 206 is provided to be movable up and down in the vertical direction and to be rotatable in the horizontal direction by the drive mechanism 4. The second reagent dispensing arm 206 holds a second reagent dispensing probe at one end.

The second reagent dispensing probe rotates along an arc-shaped rotation trajectory as the second reagent dispensing arm 206 rotates. The second reagent suction position is provided on this rotation trajectory. The second reagent suction position is provided, for example, at a position where the rotation trajectory of the second reagent dispensing probe and the movement trajectory of the opening of the reagent container 23 containing the second reagent arranged in an annular shape in the reagent rack intersect. As illustrated in FIG. 2, a second insertion hole 2032 is provided in the upper surface of the reagent storage 203 corresponding to the second reagent suction position.

Furthermore, a second reagent discharge position for discharging the second reagent sucked by the second reagent dispensing probe to the reaction container 2011 is set on the rotation trajectory of the second reagent dispensing probe. The second reagent discharge position is provided at a position where the rotation trajectory of the second reagent dispensing probe and the movement trajectory of the reaction container 2011 held by the reaction disk 201 intersect.

The second reagent dispensing probe is driven by the drive mechanism 4 and moves in the vertical direction at the second reagent suction position or the second reagent discharge position on the rotation trajectory. Under the control of the control circuitry 9, the second reagent dispensing probe sucks the reagent from the reagent container 23 which is held in the reagent rack and located immediately below the second reagent suction position via the second insertion hole 2032. In accordance with the control of the control circuitry 9, the second reagent dispensing probe discharges the sucked reagent to the reaction container 2011 located immediately below the second reagent discharge position. The reagent sucked by the second reagent dispensing probe according to the present embodiment is, for example, a second reagent. Note that the second reagent dispensing probe according to the present embodiment sucks the second reagent, but the target to be sucked by the second reagent dispensing probe is not limited thereto. That is, the target to be sucked by the second reagent dispensing probe is optional, and when the reagent container 23 containing the first reagent or the standard sample container containing the standard sample is installed in the reagent rack, the first reagent or the standard sample may be sucked and discharged to the reaction container 2011.

The first stirring unit 207 is provided in the vicinity of the outer periphery of the reaction disk 201. The first stirring unit 207 includes a first stirring arm 2071 and a first stirrer provided at a distal end of the first stirring arm 2071. The first stirring unit 207 stirs a reaction liquid of the standard sample and the first reagent contained in the reaction container 2011 located at the first stirring position on the reaction disk 201 with the first stirrer. The first stirring unit 207 stirs a reaction liquid of the test sample and the first reagent contained in the reaction container 2011 located at the first stirring position on the reaction disk 201 with the first stirrer.

The second stirring unit 208 is provided in the vicinity of the outer periphery of the reaction disk 201. The second stirring unit 208 includes a second stirring arm 2081 and a second stirrer provided at a distal end of the second stirring arm 2081. The second stirring unit 208 stirs a reaction liquid of the standard sample, the first reagent, and the second reagent contained in the reaction container 2011 located at the second stirring position on the reaction disk 201 with the second stirrer. Further, the second stirring unit 208 stirs a reaction liquid of the test sample, the first reagent, and the second reagent contained in the reaction container 2011 located at the second stirring position with the second stirrer.

The photometric unit 209 optically measures a reaction liquid of the sample, the first reagent, and the second reagent discharged into the reaction container 2011. The photometric unit 209 includes a light source and a photodetector. The photometric unit 209 emits light from the light source under the control of the control circuitry 9. The emitted light is incident from the first side wall of the reaction container 2011 and emitted from the second side wall facing the first side wall. The photometric unit 209 detects the light emitted from the reaction container 2011 with the photodetector.

Specifically, for example, the photodetector is disposed at a position on the optical axis of the light emitted from the light source to the reaction container 2011 when the transmitted light is used, and is disposed at a position shifted from the optical axis when the scattered light is used. The photodetector detects light that has passed through the reaction liquid of the standard sample, the first reagent, and the second reagent in the reaction container 2011. The automatic analyzing apparatus 1 acquires photometric data represented by the intensity of light detected by the photodetector. Then, the automatic analyzing apparatus 1 generates standard data represented by absorbance or the like based on the measurement data acquired from the photometric data at a predetermined timing. The photodetector detects light that has passed through the reaction liquid of the test sample, the first reagent, and the second reagent in the reaction container 2011. The automatic analyzing apparatus 1 acquires photometric data represented by the intensity of light detected by the photodetector. Then, the automatic analyzing apparatus 1 generates test data represented by absorbance or the like based on the measurement data acquired from the photometric data at a predetermined timing. The photometric unit 209 outputs the generated standard data and test data to the analysis circuitry 3.

The cleaning unit 210 cleans the inside of the reaction container 2011 in which the measurement of the reaction liquid has been completed by the photometric unit 209.

The installation table 211 is for installing the sample rack 21 holding the sample container 22 and the reagent container 23. For example, the installation table 211 supports the sample rack 21 that holds the sample container 22 loaded by the user. In addition, the installation table 211 supports the reagent container 23 loaded by the user. As illustrated in FIG. 2, the sample rack 21 and the reagent container 23 installed in the installation table 211 have different sizes. As illustrated in FIG. 2, an adapter 231 is attached to the reagent container 23 installed in the installation table 211. Since the adapter 231 includes a transporter handle 231_2, even when the reagent container 23 is a general-purpose reagent container, the transporter 212 of an analyzing apparatus 2 can hold and transport the reagent container 23 via the transporter handle 231_2. In addition, the installation table 211 supports the sample rack 21 on which the measurement is completed and the reagent container 23 taken out from the reagent storage 203.

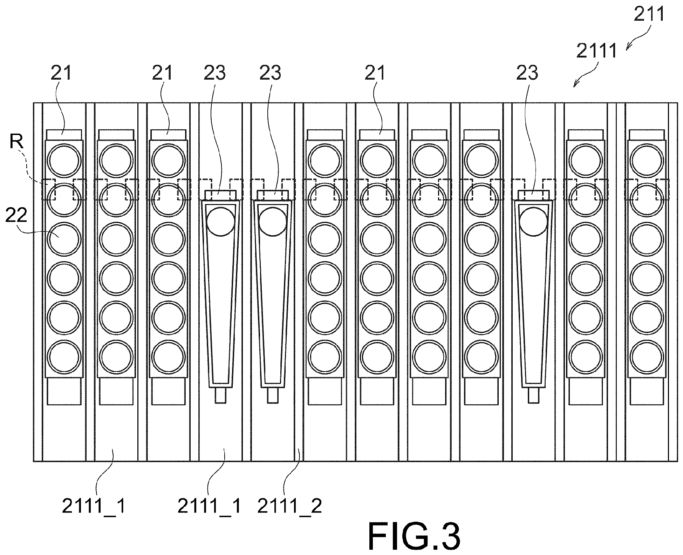

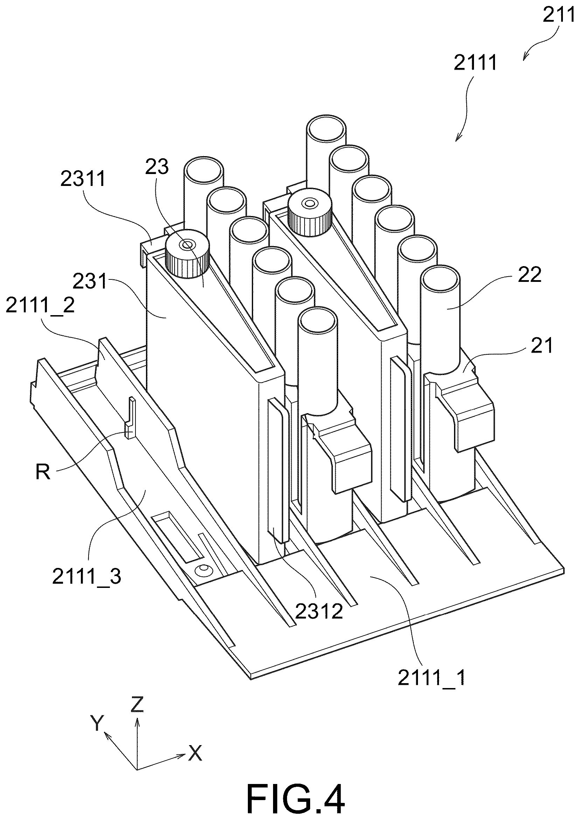

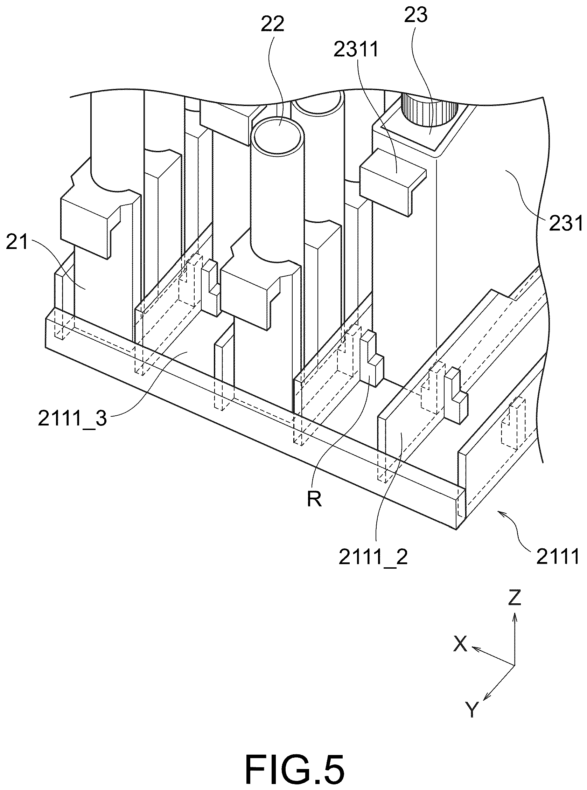

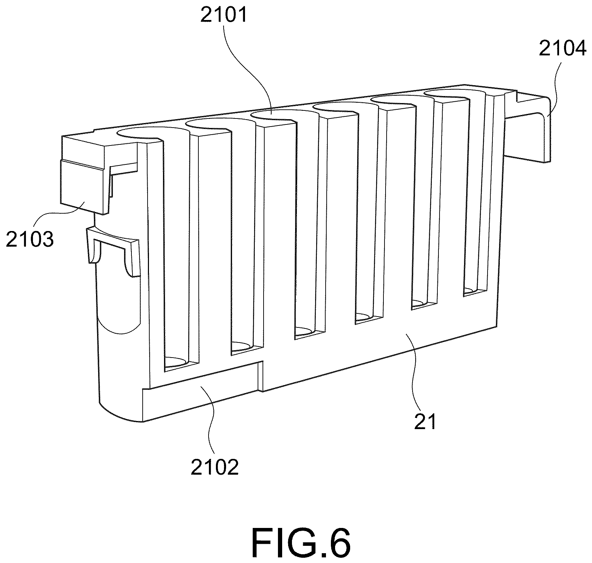

An example of a configuration of the installation table 211 and an installation mode of the sample rack 21 and the reagent container 23 will be described with reference to FIGS. 3 to 6. FIG. 3 is a diagram of the installation table 211 in the first embodiment as viewed from above. FIG. 4 is a diagram illustrating an example of an installation mode of the sample rack 21 and the reagent container 23 when the installation table 211 in the first embodiment is viewed from the user side. FIG. 5 is a diagram illustrating an example of an installation mode of the sample rack 21 and the reagent container 23 when the installation table 211 in the first embodiment is viewed from the apparatus side. FIG. 6 is a diagram illustrating an example of a configuration of the sample rack 21 according to the first embodiment.

As illustrated in FIG. 3, the installation table 211 includes a restrictor R that restricts an installation position of an object installed in the installation table 211 when a type of the object is a predetermined type including at least one of the specimen rack and the reagent container. As illustrated in FIG. 3, the installation table 211 includes a tray 2111 having a plurality of slots 2111_1 for receiving the sample rack 21 and the reagent container 23, and a wall 2111_2 for partitioning the adjacent slots.

In the example illustrated in FIG. 3, the restrictor R is provided on the wall 2111_2. Specifically, the restrictor is provided in the left and right wall portions 2111_2 of the plurality of slots 2111_1, respectively. In the example illustrated in FIG. 3, each of the restrictors R is a protrusion protruding toward the slot 2111_1. Specifically, as illustrated in FIGS. 4 and 5, each of the restrictors R is provided on the wall portion 2111_2 so as to be erected from a slot bottom portion 2111_3. In the example illustrated in FIGS. 2 and 3, 12 slots 2111_1 are provided in the tray 2111 of the installation table 211, but the number of slots 2111_1 provided in the tray 2111 of the installation table 211 is not limited to 12. That is, the number of slots 2111_1 provided in the tray 2111 of the installation table 211 is optional, and may be 11 or less, or may be 13 or more. In addition, the number of slots provided in the installation table 211 may be plural or may be one.

In the example illustrated in FIG. 3, the restrictor R does not restrict the installation position of the sample rack 21 when the sample rack 21 is installed in the installation table 211. As illustrated in FIG. 6, six sample holding units 2101 for holding sample containers are formed in an upper portion of the sample rack 21, and a cutout 2102 is formed in a bottom portion of the sample rack 21 from a side surface on the transporter handle 2103 side toward a side surface of the user handle 2104. Since the cutout 2102 is formed in the sample rack 21, when the sample rack 21 is installed in the installation table 211, the sample rack 21 can be loaded to the transporter 212 side (back side) of the tray 2111 of the installation table 211 without the installation position being restricted by the restrictor R. Note that the shape of the cutout 2102 is not limited thereto. That is, the shape of the cutout 2102 is optional, and at least when the sample rack 21 is installed in the installation table 211, the bottom portion of the sample rack 21 corresponding to the position of the restrictor R from an end portion of the tray 2111 on the transporter 212 side may be cut out.

On the other hand, in the example illustrated in FIG. 3, the predetermined type is the reagent container 23, and the restrictor R restricts the installation position of the reagent container 23 when the one installed in the installation table 211 is the reagent container 23. Specifically, as illustrated in FIG. 5, the side surface of the adapter 231 attached to the reagent container 23 on the side of the transporter handle 2311 abuts on the restrictor R, and the restrictor R restricts the installation position of the reagent container 23 to the front side of the sample rack 21.

As illustrated in FIG. 4, when the installation table 211 is viewed from the user side, that is, from the first side surface 111 side (front side of the analysis mechanism 2) illustrated in FIG. 2, the sample rack 21 and the reagent container 23 are installed so as to be aligned with the user side (front side) of the tray 2111 of the installation table 211 by the restrictor R restricting the installation position of the reagent container 23. On the other hand, as illustrated in FIG. 5, since the restrictor R restricts the installation position of the reagent container 23, the transporter handle 2311 of the sample rack 21 and the transporter handle 2311 of the adapter 231 are not installed in alignment on the transporter 212 side (back side) of the tray 2111 of the installation table 211. Therefore, the position of the transporter handle 2311 of the sample rack 21 and the position of the transporter handle 2311 of the adapter 231 are different from each other with respect to the transporter 212.

The transporter 212 is a mechanism that holds and transports the sample rack 21 or the reagent container 23 installed in the installation table 211. Specifically, the transporter 212 transports the sample rack 21 installed in the installation table 211 to the loading position. In addition, the transporter 212 transports the reagent container 23 installed in the installation table 211 to a storage position in a reagent container temporary storage 115 illustrated in FIG. 2. In addition, the transporter 212 transports the sample rack 21, which has been sampled and moved to the collecting position of the rack sampler 202, to the installation table 211. Further, the transporter 212 transports the reagent container 23 taken out from the reagent storage 203 by the reagent container transporter 214 and transported to the reagent container temporary storage 115 to the installation table 211.

Specifically, the transporter 212 includes a transporter main body 2121 and a holding arm 2122. The transporter main body 2121 moves in a direction (X direction) parallel to the first side surface 111 and the second side surface 112 along the transporter track 213. The holding arm 2122 protrudes from the transporter main body 2121, and is engaged with the sample rack 21 and the reagent container 23 to hold the sample rack 21 and the reagent container 23.

The transporter track 213 moves the transporter 212 in the direction (X direction) parallel to the first side surface 111 and the second side surface 112.

The reagent container transporter 214 has an arm (not illustrated) for taking in and out the reagent container 23 from an opening provided in the reagent storage 203. As illustrated in FIG. 3, an arm of the reagent container transporter 214 is engaged with the reagent container 23. The reagent container 23 is stored in the reagent storage 203 by the operation of the reagent container transporter 214. Alternatively, the reagent container 23 is taken out of the reagent storage 203 by the operation of the reagent container transporter 214. In addition, the reagent container transporter 214 according to the present embodiment holds the reagent container 23 transported to the reagent container temporary storage 115 and transports the reagent container to the reagent storage 203.

Returning to FIG. 1, the control circuitry 9 realizes an acquisition function 91, a control function 92, and an identification function 93 by executing a control program, for example. In the present embodiment, a case where the acquisition function 91, the control function 92, and the identification function 93 are realized by a single processor will be described, but the present invention is not limited thereto. For example, the control circuitry may be configured by combining a plurality of independent processors, and each processor may execute a control program to implement the acquisition function 91, the control function 92, and the identification function 93.

The acquisition function 91 is a function of acquiring position information related to a position where the sample rack 21 or the reagent container 23 installed in the installation table 211 is held. The acquisition function 91 according to the present embodiment acquires the first position information or the second position information from the memory 8 based on the determination result of the identification function 93. In the present embodiment, the acquisition function 91 corresponds to an acquisition unit in the present embodiment.

The control function 92 is a function of integrally controlling each unit in the automatic analyzing apparatus 1 based on input information input from the input interface 5. For example, the control function 92 controls the drive mechanism 4 and the analysis mechanism 2 in the control circuitry 9, and controls the analysis circuitry 3 so as to perform analysis according to the measurement item. In addition, the control function 92 controls the transporter 212 to hold the sample rack 21 installed in the installation table 211 based on the first position information. In addition, the control function 92 controls the transporter 212 to hold the reagent container 23 installed in the installation table 211 based on the second position information. Note that the control function 92 corresponds to a control unit in the present embodiment.

The identification function 93 identifies which one of the sample rack 21 and the reagent container 23 is installed in the installation table 211. The identification function 93 according to the present embodiment identifies which one of the sample rack 21 and the reagent container 23 is installed based on information on the sample rack 21 or the reagent container 23 input by the user via the input interface 5. The identification function 93 corresponds to an identification unit in the present embodiment.

As described above, the automatic analyzing apparatus 1 according to the present embodiment includes the installation table 211 for installing the sample rack 21 and the reagent container 23, and the transporter 212 that holds and transports the sample rack 21 or the reagent container 23 installed in the installation table 211, in which since the installation table 211 includes the restrictor R that restricts the installation position of the reagent container 23, the user can install the sample rack 21 and the reagent container 23 so as to be aligned with the first side surface 111 side, which is the user side (front side) in the installation table 211, and since the transporter 212 holds and transports the sample rack 21 and the reagent container 23 aligned with the first side surface 111 side, the user easily holds the user handle 2104 provided on the sample rack 21 and the user handle 2312 provided on the adapter 231, and easily installs the sample rack 21 and the reagent container 23 in the installation table 211 and easily takes out the sample rack 21 and the reagent container 23 from the installation table. Therefore, usability can be prevented from being impaired in the automatic analyzing apparatus including the installation table for installing the sample rack and the reagent container.

### [First Modification]

In the automatic analyzing apparatus 1 according to the first embodiment described above, the restrictor R restricts the installation position of the reagent container 23. However, in a case where a small sample rack smaller than the size of the sample rack 21 is installed in the installation table 211, the restrictor R may restrict the installation position of the small sample rack.

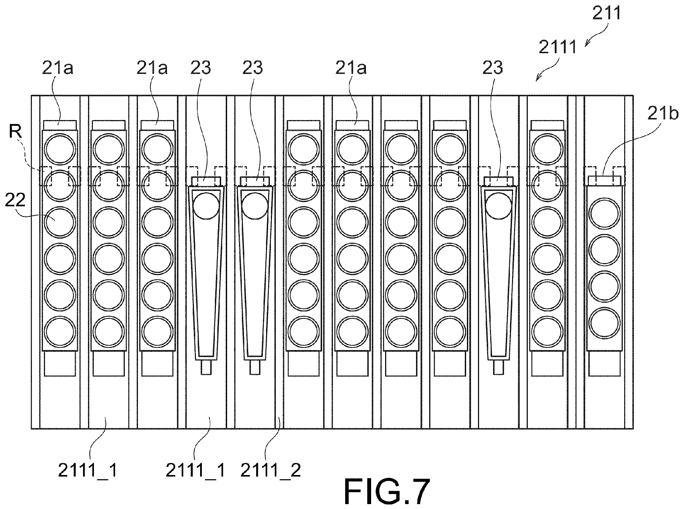

FIG. 7 is a diagram of the installation table 211 according to the first modification as viewed from above, and is a diagram corresponding to FIG. 3. As illustrated in FIG. 7, the sample rack 21 and the reagent container 23 are installed in the installation table 211 according to the present modification, and the sample rack 21 installed in the installation table 211 according to the present modification is either a large sample rack 21a or a small sample rack 21b. The large sample rack 21a corresponds to a first specimen rack in the present embodiment, and the small sample rack 21b corresponds to a second specimen rack in the present embodiment. As illustrated in FIG. 7, when the predetermined type includes the reagent container 23 and the small sample rack 21b, and the predetermined type includes the reagent container 23 and the small sample rack 21b installed in the installation table 211, the restrictor R may restrict the installation position of the reagent container 23 and the installation position of the small sample rack 21b.

As described above, in the automatic analyzing apparatus 1 according to the first modification, the automatic analyzing apparatus 1 according to the present embodiment includes the installation table 211 for installing the sample rack 21 and the reagent container 23, and the transporter 212 that holds and transports the sample rack 21 or the reagent container 23 installed in the installation table 211, in which since the installation table 211 includes the restrictor R that restricts the installation position of the reagent container 23, even when the large sample rack 21a, the small sample rack 21b, and the reagent container 23, which have different sizes, are installed, it is possible to install the large sample rack 21a, the small sample rack 21b, and the reagent container 23 so as to be aligned with the first side surface 111 side, which is the user side (front side) in the installation table 211, and since the transporter 212 holds and transports the large sample rack 21a, the small sample rack 21b, and the reagent container 23 aligned with the first side surface 111 side, the user easily holds the user handle 2104 provided on the large sample rack 21a and the small sample rack 21b, and the user handle 2312 provided on the adapter 231, easily installs the large sample rack 21a, the small sample rack 21b, and the reagent container 23 in the installation table 211, and easily takes out the large sample rack 21a, the small sample rack 21b, and the reagent container 23 from the installation table 211. Therefore, usability can be prevented from being impaired in the automatic analyzing apparatus including the installation table for installing the sample rack 21 and the reagent container 23.

### [Second Embodiment]

In the automatic analyzing apparatus 1 according to the first embodiment described above, the sample rack 21 and the reagent container 23 are aligned and installed on the user side (front side) by providing the restrictor R in the installation table 211, but the present invention is not limited thereto. In the second embodiment, a position adjuster that adjusts the installation position of the sample rack 21 or the reagent container 23 installed in the installation table 211 may be provided. A case in which this modification is applied to the first embodiment will be referred to as a second embodiment, and portions different from those of the automatic analyzing apparatus 1 according to the first embodiment will be described.

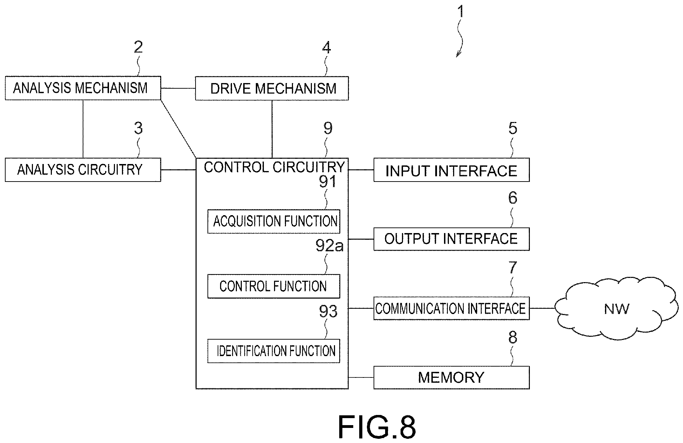

FIG. 8 is a block diagram illustrating an example of a functional configuration of the automatic analyzing apparatus according to the second embodiment, and is a diagram corresponding to FIG. 1. As illustrated in FIG. 8, in the automatic analyzing apparatus 1 according to the present embodiment, the control function is different from that of the automatic analyzing apparatus 1 according to the first embodiment, and thus is denoted as a control function 92a. Functions and configurations other than the control function 92a are the same as those in FIG. 1 described above, and thus description thereof is omitted.

The control function 92 according to the present embodiment controls a position adjuster described later. Specifically, the control function 92 controls the position adjuster based on a detection result of a detection sensor described later to move the sample rack 21 or the reagent container 23 to a predetermined position. The predetermined position is a position of each of the sample rack 21 and the reagent container 23 when the sample rack 21 and the reagent container 23 are aligned and installed on the transporter 212 side (back side) of the tray 2111 of the installation table 211.

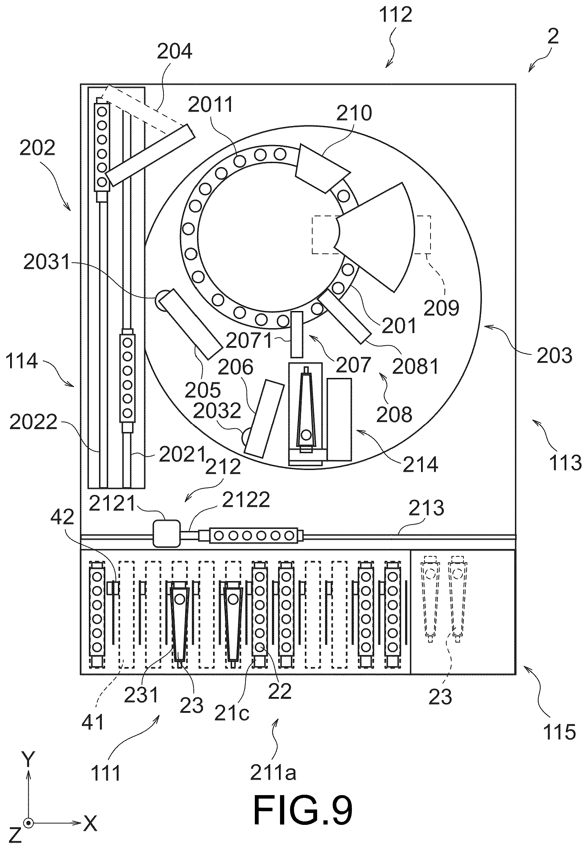

FIG. 9 is a schematic diagram illustrating an example of a configuration of an analysis mechanism 2 according to the second embodiment, and is a diagram corresponding to FIG. 2. As illustrated in FIG. 9, the analysis mechanism 2 according to the present embodiment is configured by adding a position adjuster 41 and a detection sensor 42 to the analysis mechanism 2 according to the first embodiment. In addition, in the automatic analyzing apparatus 1 according to the second embodiment, the configuration of the installation table is different from that of the automatic analyzing apparatus 1 according to the first embodiment, and thus is denoted as an installation table 211a. The configurations of the analysis mechanism 2 other than the installation table 211a, the position adjuster 41, and the detection sensor 42 are the same as those in FIG. 2, and thus the description thereof will be omitted.

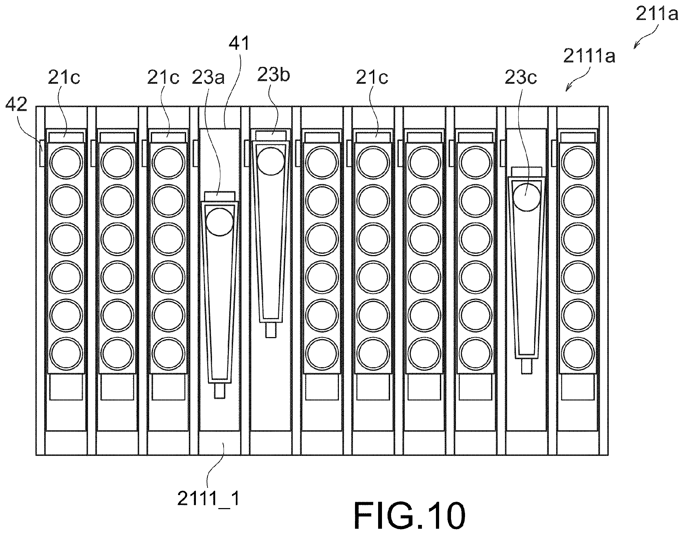

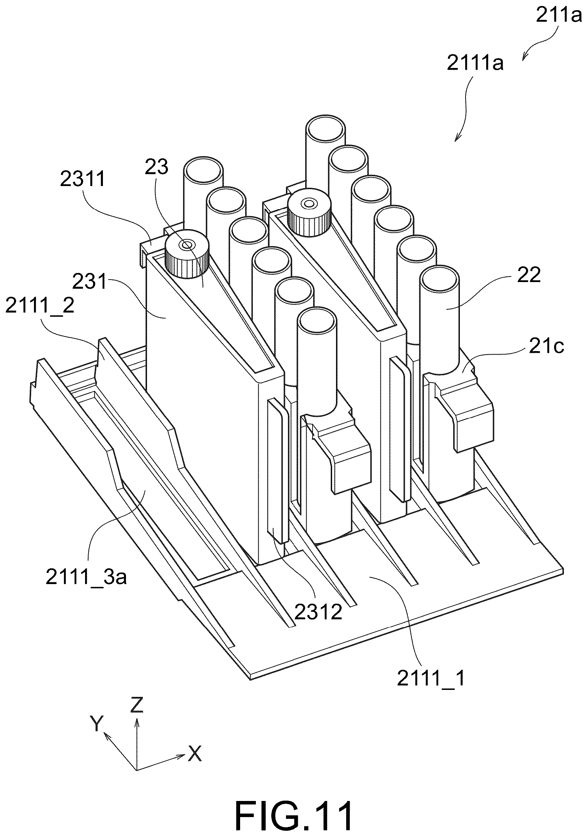

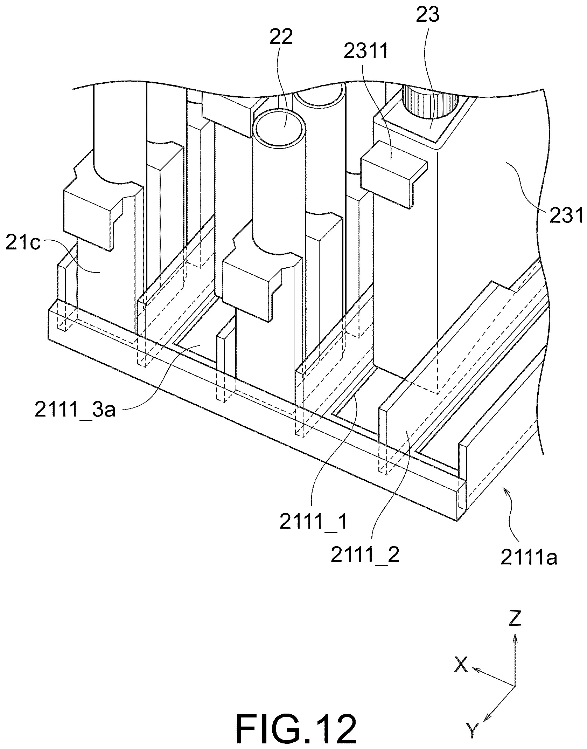

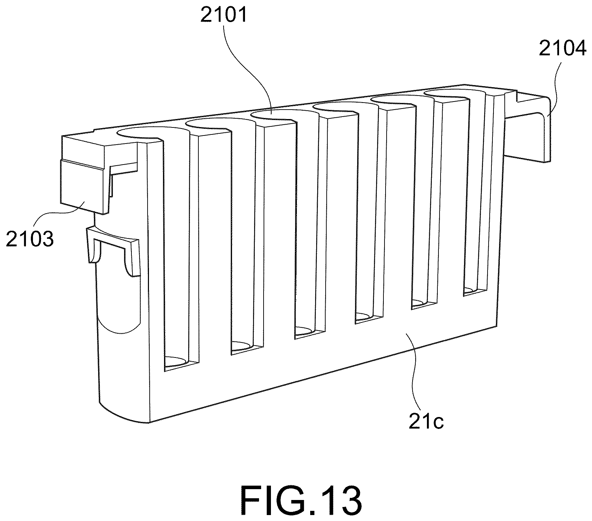

An example of the configuration of the installation table 211a and the installation mode of the sample rack 21c and the reagent container 23 according to the present embodiment will be described with reference to FIGS. 10 to 13. FIG. 10 is a diagram of the installation table 211 according to the second embodiment as viewed from above, and is a diagram corresponding to FIG. 3. FIG. 11 is a diagram illustrating an example of an installation mode of the sample rack 21 and the reagent container 23 when the installation table 211 in the second embodiment is viewed from the user side, and is a diagram corresponding to FIG. 4. FIG. 12 is a diagram illustrating an example of an installation mode of the sample rack 21 and the reagent container 23 when the installation table 211 in the second embodiment is viewed from the apparatus side, and is a diagram corresponding to FIG. 5. FIG. 13 is a diagram illustrating an example of a configuration of the sample rack 21 according to the first embodiment and is a diagram corresponding to FIG. 6.

As illustrated in FIGS. 10 to 12, the installation table 211a according to the present embodiment is different from that of the first embodiment in that it does not include the restrictor R. As illustrated in FIGS. 11 and 12, the present embodiment is different from the first embodiment in that a slot bottom portion 2111_3a of the tray 2111a of the installation table 211a according to the present embodiment is provided with an opening for placing the sample rack 21c on the position adjuster 41 disposed below the slot 2111_1. Further, as illustrated in FIG. 13, the present embodiment is different from the first embodiment in that the cutout 2102 is not formed in the bottom portion of the sample rack 21c according to the present embodiment. Configurations of the installation table 211a, the sample rack 21c, and the reagent container 23 other than the point that the restrictor R is not provided, the point that the opening is provided, and the point that the cutout 2102 is not formed in the bottom portion of the sample rack 21c are the same as those of the first embodiment described above, and thus the description thereof will be omitted.

As illustrated in FIG. 10, since the installation table 211a according to the present embodiment does not have the restrictor R, the sample rack 21c and the reagent container 23 installed in the installation table 211 by the user are installed at optional positions in the slot 2111_1. In the example illustrated in FIG. 10, the reagent container 23a is installed by the user on the first side surface 111 side illustrated in FIG. 9 which is the user side (front side) so as to be aligned with the sample rack 21, the reagent container 23b is installed by the user on the transporter 212 side (back side) so as to be aligned with the sample rack 21, and the reagent container 23c is installed by the user in the middle between the first side surface 111 side and the transporter 212 side.

The position adjuster 41 is a mechanism for adjusting the position of the sample rack 21c or the reagent container 23 installed in the installation table 211a to a predetermined position. The position adjuster 41 is provided below the tray 2111. The position adjuster 41 adjusts the position of the sample rack 21c or the reagent container 23 installed in the installation table 211a to a predetermined position by moving the position of the sample rack 21c or the reagent container 23 installed in the installation table 211a to a predetermined position under the control of the control circuitry 9. Specifically, the position adjuster 41 moves the sample rack 21c or the reagent container 23 installed in the installation table 211a from the first side surface 111 side to the transporter 212 side (back side), thereby adjusting the position of the sample rack 21c or the reagent container 23 installed in the installation table 211a to a predetermined position by the user. As illustrated in FIG. 9, the position adjuster 41 is provided in each of the plurality of slots 2111_1 in the installation table 211a.

The position adjuster 41 may adjust the position of the sample rack 21c or the reagent container 23 installed in the installation table 211a by the transporter 212. Specifically, the position adjuster 41 may adjust the position so as to align the sample rack 21c or the reagent container 23 on the first side surface 111 side by moving the sample rack 21c or the reagent container 23 installed by the transporter 212 to be aligned on the transporter 212 side (back side) illustrated in FIG. 9 from the transporter 212 side to the first side surface 111 side.

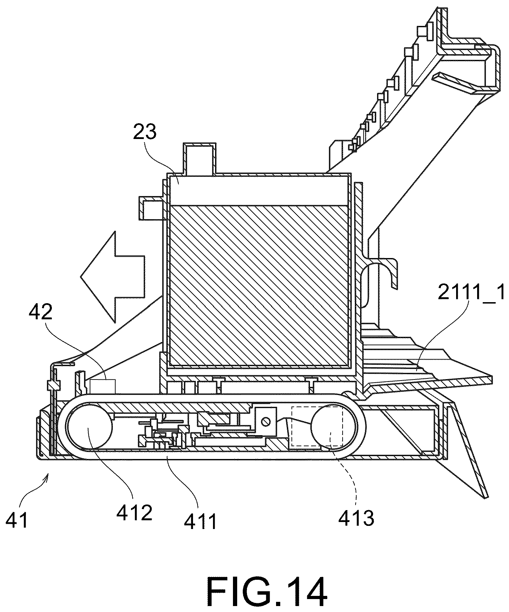

FIG. 14 is a diagram illustrating an example of a configuration of the position adjuster 41 according to the second embodiment. As illustrated in FIG. 14, the position adjuster 41 includes a belt 411, a pulley 412, and a motor 413. In the example illustrated in FIG. 14, the reagent container 23 is installed in the slot 2111_1. In the example illustrated in FIG. 14, when the reagent container 23 is installed in the slot 2111_1 of the installation table 211 by the user, the motor 413 of the position adjuster 41 rotates the pulley 412 to rotate the belt 411, and thereby the belt 411 moves the reagent container 23 from the first side surface 111 side illustrated in FIG. 9 to the transporter 212 side. As a result, the position adjuster 41 adjusts the position of the reagent container 23.

The detection sensor 42 detects the sample rack 21c or the reagent container 23 installed in the installation table 211a. The detection sensor 42 corresponds to a detection sensor in the present embodiment. The detection sensor 42 includes, for example, a photoelectric sensor (LED sensor), a pressure sensor, and the like. Hereinafter, the present embodiment will be described assuming that the detection sensor 42 according to the present embodiment is configured by a photoelectric sensor, and a detection result of the detection sensor 42 is output to the control circuitry 9.

The detection sensor 42 is provided, for example, on the tray 2111a of the installation table 211a. Specifically, as illustrated in FIG. 10, the detection sensor 42 is provided, for example, on the wall 2111_2 of the tray 2111a of the installation table 211a. As illustrated in FIG. 10, the detection sensor 42 is provided on the transporter 212 side of the wall 2111_2 of the tray 2111a of the installation table 211a.

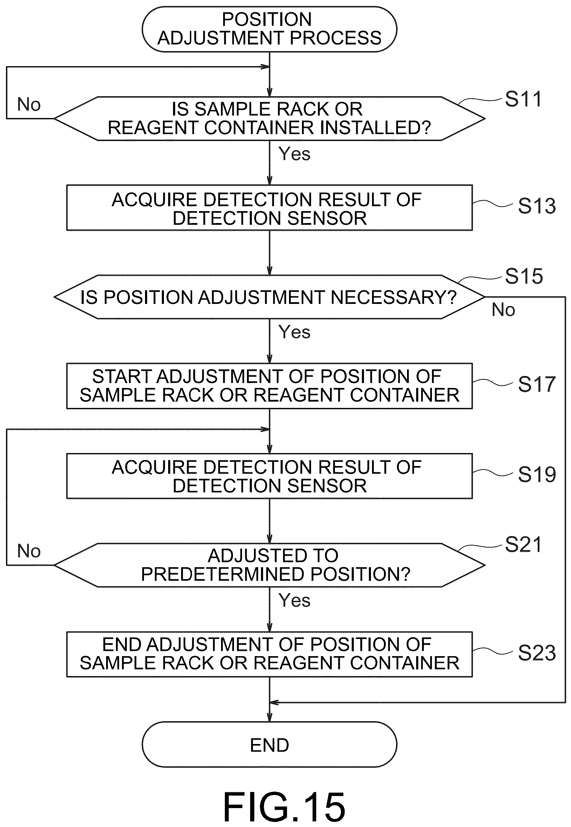

FIG. 15 is a flowchart for explaining position adjustment processing executed in the automatic analyzing apparatus 1 according to the second embodiment. In this position adjustment processing, when the sample rack 21c or the reagent container 23 is installed in the installation table 211a, a detection result of the detection sensor 42 is acquired, it is determined whether or not position adjustment is necessary, adjustment of the position of the sample rack 21a or the reagent container 23 is started, a detection result of the detection sensor 42 is acquired, it is determined whether or not the position is adjusted to a predetermined position, and adjustment of the position of the sample rack 21c or the reagent container 23 is ended. This position adjustment processing is processing executed when the sample rack 21c or the reagent container 23 is installed in the installation table 211a.

As illustrated in FIG. 15, first, the control function 92a in the control circuitry 9 determines whether the sample rack 21c or the reagent container 23 is installed (step S11). Specifically, the control function 92a determines whether the sample rack 21c or the reagent container 23 is installed in the installation table 211a based on a detection result of a sensor (not illustrated). As the sensor, for example, a weight sensor, a photoelectric sensor, a pressure sensor, or the like is used. Note that the control function 92a performs determination based on the detection result of the sensor, but the method of determining the installation of the control function 92a is not limited thereto. That is, a method of determining the installation of the control function 92a is optional, and whether the sample rack 21c or the reagent container 23 is installed may be determined by determining whether the user has pressed a button provided in the installation table 211a for each slot 2111_1. Then, in step S11, when the sample rack 21c or the reagent container 23 is not installed (step S11: No), the control function 92a repeats the processing of step S11 and stands by.

On the other hand, when the sample rack 21c or the reagent container 23 is installed in step S11 (step S11: Yes), the control function 92a in the control circuitry 9 acquires the detection result of the detection sensor 42 (step S13). Specifically, the control function 92a acquires a detection result of the detection sensor 42 corresponding to the slot 2111_1 of the installation table 211a in which the sample rack 21c or the reagent container 23 is installed.

Next, as illustrated in FIG. 15, the control function 92a in the control circuitry 9 determines whether position adjustment is necessary (step S15). Specifically, the control function 92a determines whether it is necessary to adjust the position of the sample rack 21c or the reagent container 23 installed in the installation table 211a to a predetermined position based on the detection result of the detection sensor 42 acquired in step S13. More specifically, for example, when the detection sensor 42 detects the sample rack 21c or the reagent container 23 installed in the installation table 211a, the control function 92a determines that the position of the sample rack 21c or the reagent container 23 installed in the installation table 211a does not need to be adjusted to a predetermined position assuming that the sample rack 21c or the reagent container 23 is installed at a predetermined position. On the other hand, for example, when the detection sensor 42 does not detect the sample rack 21c or the reagent container 23 installed in the installation table 211a, the control function 92a determines that the position of the sample rack 21c or the reagent container 23 installed in the installation table 211a needs to be adjusted to a predetermined position assuming that the sample rack 21c or the reagent container 23 is not installed at a predetermined position.

Then, in step S15, when the position needs to be adjusted (step S15: Yes), the control function 92a of the control circuitry 9 starts adjustment of the position of the sample rack 21c or the reagent container 23 (step S17). Specifically, the control function 92a controls the position adjuster 41 to start movement of the sample rack 21c or the reagent container 23 to a predetermined position, thereby starting adjustment of the position of the sample rack 21c or the reagent container 23.

Next, as illustrated in FIG. 15, the control function 92a of the control circuitry 9 acquires a detection result of the detection sensor 42 (step S19). Specifically, the control function 92a acquires a detection result of the detection sensor 42 corresponding to the slot 2111_1 of the installation table 211a in which the sample rack 21c or the reagent container 23 is installed, similarly to step S13.

Next, as illustrated in FIG. 15, the control function 92a of the control circuitry 9 determines whether or not adjustment to a predetermined position has been performed (step S21). Specifically, the control function 92a determines whether the position of the sample rack 21c or the reagent container 23 is adjusted to a predetermined position based on the detection result of the detection sensor 42. Then, in a case where the adjustment to the predetermined position has not been performed in step S21 (step S21: No), the control function 92a of the control circuitry 9 repeats the processing of steps S19 and S21 and stands by until the adjustment to the predetermined position is performed.

On the other hand, in a case where the adjustment to the predetermined position has been performed in step S21 (step S21: Yes), the control function 92a of the control circuitry 9 ends the adjustment of the position of the sample rack 21c or the reagent container 23 (step S23). Specifically, the control function 92a controls the position adjuster 41 to end movement of the sample rack 21c or the reagent container 23 to a predetermined position, thereby ending adjustment of the position of the sample rack 21c or the reagent container 23.

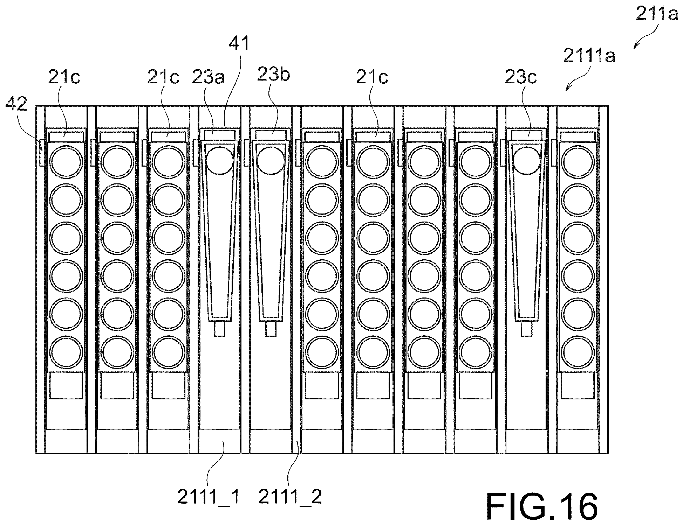

FIG. 16 is a diagram for explaining an installation mode of the sample rack 21c and the reagent container 23 in the installation table 211a after position adjustment by the position adjuster 41 in the second embodiment. As illustrated in FIG. 16, after the reagent container 23a and the reagent container 23c illustrated in FIG. 10 are installed in the installation table 211a, the positions of the reagent container 23a and the reagent container 23c are adjusted by the position adjuster 41, and the reagent container is installed so as to be aligned with the sample rack 21c on the transporter 212 side (back side).

When the adjustment of the position is not necessary in step S15 (step S15: No) or the position adjustment is ended in step S23, the position adjustment process according to the present embodiment is ended.

As described above, the automatic analyzing apparatus 1 according to the present embodiment includes the installation table 211a for installing the sample rack 21c and the reagent container 23, the transporter 212 that holds and transports the sample rack 21c or the reagent container 23 installed in the installation table 211a, the position adjuster 41 that adjusts the installation position of the sample rack 21c or the reagent container 23 installed in the installation table 211a to a predetermined position, and the detection sensor 42 that detects the sample rack 21c or the reagent container 23 installed in the installation table 211a. Therefore, even when the user installs the sample rack 21c or the reagent container 23 at an optional position in the slot 2111_1 of the installation table 211a, the position of the sample rack 21c or the reagent container 23 is adjusted to a predetermined position, and thus in the automatic analyzing apparatus including the installation table for installing the sample rack or the reagent container, it is possible to prevent usability from being impaired.

In the present embodiment, the detection sensor 42 is provided on the transporter 212 side (back side) of the wall 2111_2 of the tray 2111a of the installation table 211a, but the installation position of the detection sensor 42 is not limited thereto. That is, the installation position of the detection sensor 42 is optional, and may be provided on the first side surface 111 side (front side) of the wall 2111_2 of the tray 2111a of the installation table 211a. In this case, in step S15 of the position adjustment processing, the control function 92a may determine that the position of the sample rack 21c or the reagent container 23 installed in the installation table 211a needs to be adjusted to a predetermined position assuming that the sample rack 21c or the reagent container 23 is not installed at the predetermined position when the detection sensor 42 detects the sample rack 21c or the reagent container 23, and may determine that the position of the sample rack 21c or the reagent container 23 installed in the installation table 211a does not need to be adjusted to the predetermined position assuming that the sample rack 21c or the reagent container 23 is installed at the predetermined position when the detection sensor 42 does not detect the sample rack 21c or the reagent container 23.

### [Second Modification]

In the automatic analyzing apparatus 1 according to the second embodiment described above, the position adjuster 41 includes the belt 411, the pulley 412, and the motor 413, but the configuration of the position adjuster 41 is not limited thereto. The position adjuster 41 may have other configurations.

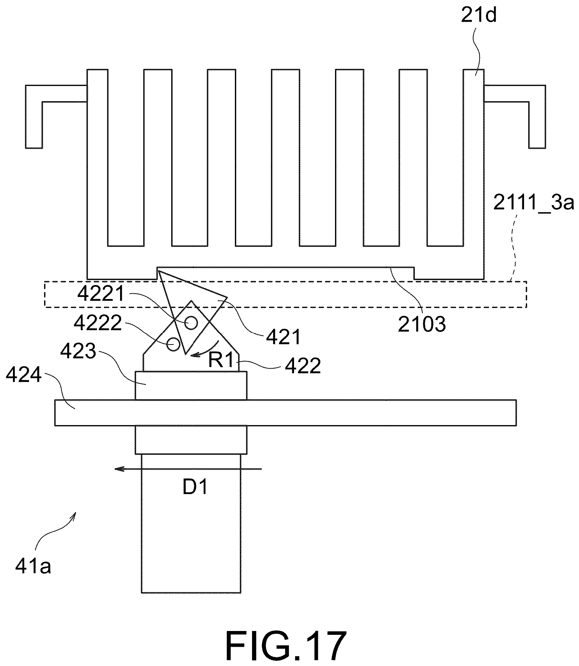

FIG. 17 is a diagram illustrating an example of a configuration of an position adjuster 41a according to a second modification. As illustrated in FIG. 17, the position adjuster 41a according to the second modification is provided below the slot bottom portion 2111_3a. As illustrated in FIG. 17, the position adjuster 41a includes a claw portion 421, a support portion 422, a sliding portion 423, and a sliding shaft 424.

The claw portion 421 is in contact with a recess 2105 formed in the bottom portion of the sample rack 21c according to second modification and a recess formed in the bottom portion of the adapter 231 attached to the reagent container 23. The claw portion 421 is biased in an R1 direction by a torsion spring so as to abut against a stopper 4222 to be described later with a rotation shaft 4221 to be described later as an axis. As illustrated in FIG. 17, a part of the claw portion 421 protrudes from an opening provided in the slot bottom portion 2111_3a.

The support portion 422 supports the claw portion 421. As illustrated in FIG. 17, the support portion 422 includes the rotation shaft 4221 and the stopper 4222. The rotation shaft 4221 is a shaft member for rotatably supporting the claw portion 421. The stopper 4222 is a member for stopping the rotation of the claw portion 421 in the R1 direction.

The sliding portion 423 slides with respect to the sliding shaft 424. Specifically, the sliding portion 423 slides with respect to the sliding shaft 424 by the drive mechanism 4 such as a belt or a ball screw attached to the sliding portion 423. The sliding portion 423 slides in a direction D1 to bring the claw portion 421 into contact with the recess 2105 of the sample rack 21 or the recess of the adapter 231 attached to the reagent container 23, thereby adjusting the position of the sample rack 21d or the reagent container 23 to a predetermined position. The sliding shaft 424 is a guide member for sliding the sliding portion 423 in a predetermined direction.

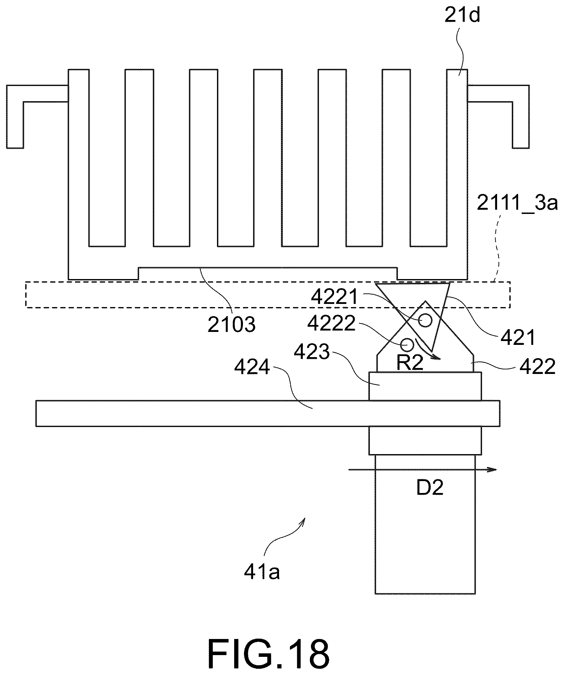

Next, the operation of the position adjuster 41a according to the second modification will be described with reference to FIGS. 17 and 18. FIG. 18 is a diagram illustrating an example of an operation of the position adjuster 41a according to the second modification. In FIGS. 17 and 18, the operation of the position adjuster 41a when the sample rack 21d is adjusted to a predetermined position will be described. As illustrated in FIG. 17, when the sample rack 21d is adjusted to a predetermined position, the control function 92a controls the drive mechanism 4 to slide the sliding portion 423 in the direction D1 illustrated in FIG. 17 and bring the claw portion 421 into contact with the recess 2105 of the sample rack 21d. Then, the control function 92a adjusts the position of the sample rack 21d to a predetermined position by further sliding the sliding portion 423 in the direction D1 in a state where the claw portion 421 is in contact with the recess 2105 of the sample rack 21d.

After completion of the position adjustment, as illustrated in FIG. 18, the control function 92a controls the drive mechanism 4 to slide the sliding portion 423 in a direction D2 illustrated in FIG. 18. When the claw portion 421 comes into contact with the recess 2105 of the sample rack 21 in the state of sliding in the D2 direction, the claw portion 421 rotates in an R2 direction about the rotation shaft 4221 and gets under the bottom surface of the sample rack 21. The control function 92a further slides the sliding portion 423 in the direction D2, so that the claw portion 421 comes out from below the bottom surface of the sample rack 21. When the torsion spring biases the claw portion 421 in the R1 direction, the claw portion 421 returns to the state illustrated in FIG. 17.

As described above, also in the configuration of the position adjuster 41a according to the present modification, the installation position of the sample rack 21d or the reagent container 23 can be adjusted.

### [Third Embodiment]

In the automatic analyzing apparatus 1 according to the first and second embodiments described above, the installation position of the sample rack 21 or the reagent container 23 is set to a predetermined position by restricting the installation position or adjusting the installation position so that the transporter 212 can hold the sample rack 21 or the reagent container 23 installed in the installation table 211, but the present invention is not limited thereto. In the third embodiment, the automatic analyzing apparatus 1 may detect the installation position of the sample rack 21 or the reagent container 23 by a position detector that detects the installation position. Hereinafter, the first embodiment to which this modification is applied is referred to as a third embodiment, and portions different from those of the first embodiment will be described.

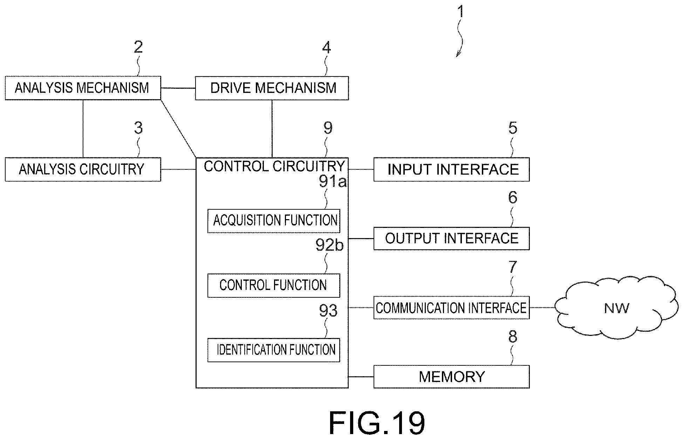

FIG. 19 is a block diagram illustrating an example of a functional configuration of the automatic analyzing apparatus according to the third embodiment, and is a diagram corresponding to FIG. 1. As illustrated in FIG. 19, in the automatic analyzing apparatus 1 according to the present embodiment, acquisition function and the control function are different from those of the automatic analyzing apparatus 1 according to the first embodiment, and thus are denoted as an acquisition function 91a and a control function 92b. Functions and configurations other than the acquisition function 91a and the control function 92b are the same as those in FIG. 1 described above, and thus description thereof is omitted.

The acquisition function 91a according to the present embodiment acquires a detection result of a position detector to be described later. The control function 92b according to the present embodiment controls the transporter 212 based on a detection result of the position detector to be described later. Specifically, the control function 92b moves the holding arm 2122 of the transporter 212 to the installation position of the sample rack 21c or the reagent container 23 based on the detection result of the position detector, and causes the holding arm 2122 of the transporter 212 to hold and transport the sample rack 21c or the reagent container 23. More specifically, the control function 92a determines the operation amount of the holding arm 2122 based on the detection result of the position detector, and moves the holding arm 2122 according to the determined operation amount to cause the transporter 212 to hold and transport the sample rack 21c or the reagent container 23.

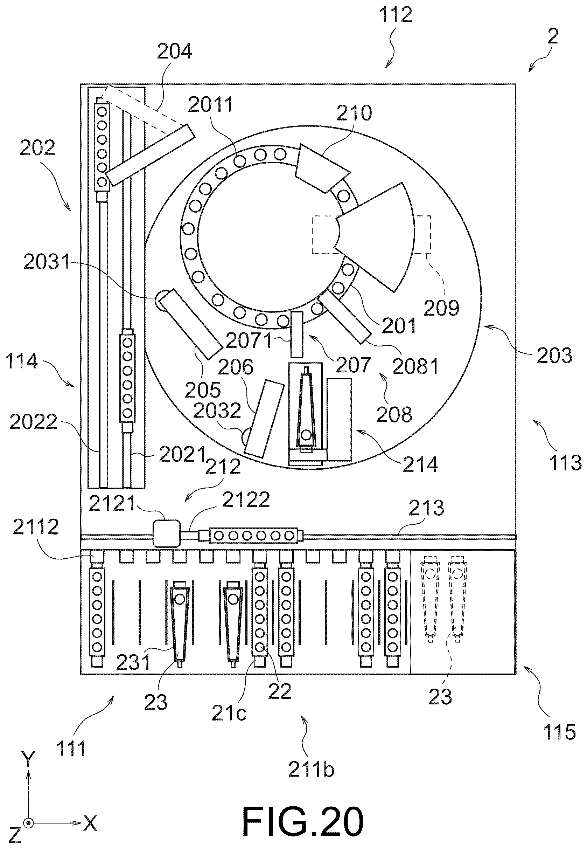

FIG. 20 is a diagram illustrating an example of a configuration of an analysis mechanism 2 according to the third embodiment, and is a diagram corresponding to FIG. 2. As illustrated in FIG. 20, in the automatic analyzing apparatus 1 according to the present embodiment, the installation table is different from that of the automatic analyzing apparatus 1 according to the first embodiment, and thus is denoted as an installation table 211b. Configurations other than the installation table 211b are the same as those in FIG. 2 described above, and thus description thereof is omitted.

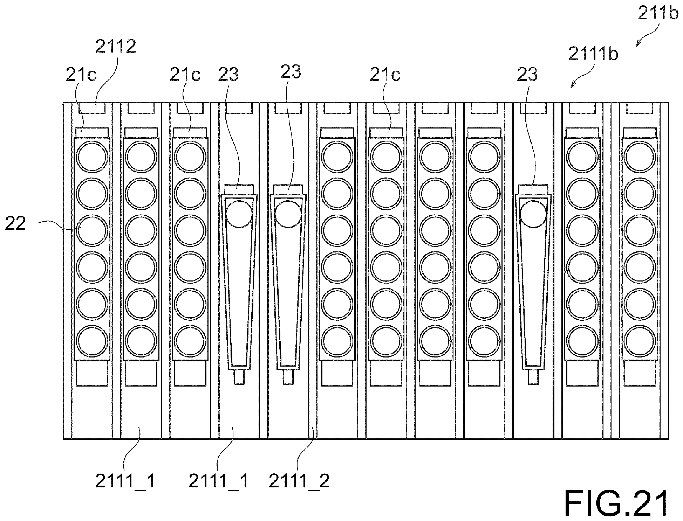

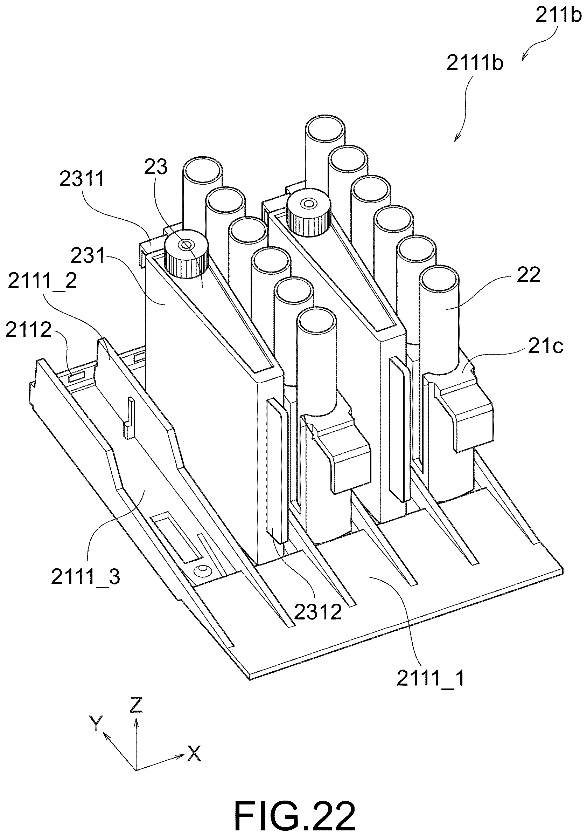

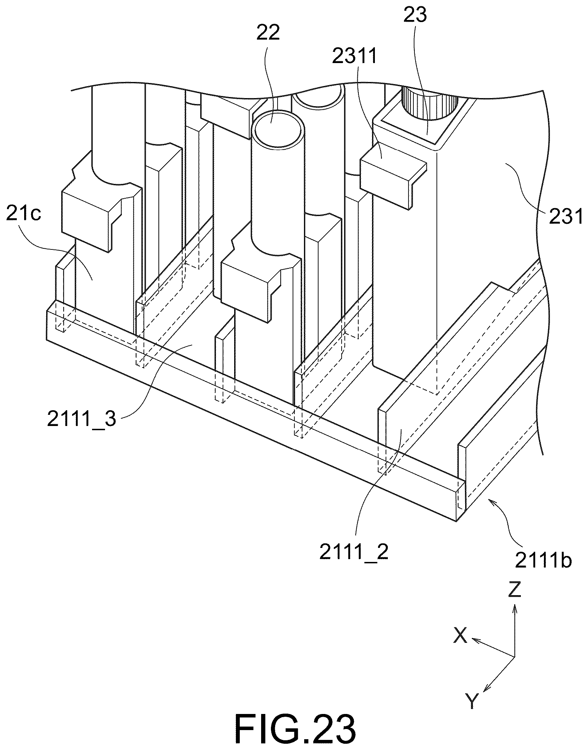

An example of the configuration of the installation table 211b and the installation mode of the sample rack 21c and the reagent container 23 according to the present embodiment will be described with reference to FIGS. 21 to 23. FIG. 21 is a diagram of the installation table 211 according to the present embodiment as viewed from above, and is a diagram corresponding to FIG. 3. FIG. 22 is a diagram illustrating an example of a configuration of the sample rack 21c according to the present embodiment and is a diagram corresponding to FIG. 4. FIG. 23 is a diagram illustrating an example of an installation mode of the sample rack 21c and the reagent container 23 when the installation table 211 in the present embodiment is viewed from the user side, and is a diagram corresponding to FIG. 5.

As illustrated in FIGS. 21 to 23, the installation table 211b according to the present embodiment is different from that of the first embodiment in that it does not include the restrictor R. As illustrated in FIGS. 21 and 22, the installation table 211b is different from that of the first embodiment in including a position detector 2112. Configurations of the installation table 211b and the reagent container 23 other than the point that the restrictor R is not provided and the point that the position detector 2112 is provided are the same as those of the first embodiment described above, and thus the description thereof is omitted. In addition, since the configuration of the sample rack 21c is the same as that of the second embodiment described above, the description thereof will be omitted.

The position detector 2112 is a sensor that is provided in the installation table 211b and detects the installation position of the sample rack 21c or the reagent container 23 installed in the installation table 211b. The position detector 2112 according to the present embodiment detects the installation position of the sample rack 21c or the reagent container 23 installed in the installation table 211b by measuring the distance to the sample rack 21c or the reagent container 23 installed in the installation table 211b. The position detector 2112 according to the present embodiment is, for example, a laser displacement meter. The position detector 2112 detects the installation position of the sample rack 21c or the reagent container 23 when the sample rack 21c or the reagent container 23 is installed in the installation table 211b. As illustrated in FIG. 3, the position detector 2112 is provided for each slot 2111_1 on the transporter 212 side (back side) in the slot 2111_1. The detection result of the position detector 2112 is output to the control circuitry 9.

As described above, the automatic analyzing apparatus 1 according to the third embodiment includes the installation table 211b for installing the sample rack 21c and the reagent container 23, the transporter 212 that holds and transports the sample rack 21c or the reagent container 23 installed in the installation table 211b, and the position detector 2112 that is provided in the installation table 211b and detects the installation position of the sample rack 21 or the reagent container 23 installed in the installation table 211 by measuring the distance to the sample rack 21c or the reagent container 23 installed in the installation table 211b. Therefore, even when the user installs the sample rack 21b or the reagent container 23 at an optional position in the slot 2111_1, the position detector 2112 detects the installation position, and the transporter 212 transports the sample rack 21c or the reagent container 23 based on the detection result, and thus the user can install the sample rack 21c or the reagent container 23 in the installation table 211b without being conscious of the installation position. Therefore, usability can be prevented from being impaired in the automatic analyzing apparatus including the installation table for installing the sample rack and the reagent container.

In addition, in the automatic analyzing apparatus 1 according to the third embodiment, since the installation table 211b includes the position detector 2112, the position detector 2112 can detect the installation position of the sample rack 21c or the reagent container 23 when the sample rack 21c or the reagent container 23 is installed in the installation table 211b, and when the holding arm 2122 of the transporter 212 is moved to the position of the sample rack 21c or the reagent container 23 installed in the installation table 211b, the operation amount of the holding arm 2122 is determined, so that the throughput of the automatic analyzing apparatus 1 can be improved as compared with the case where the position detector 2112 is provided in the holding arm 2122.

### [Third Modification]

In the automatic analyzing apparatus 1 according to the third embodiment described above, the position detector detects the installation position of the sample rack 21c or the reagent container 23 installed in the installation table 211c by measuring the distance to the sample rack 21c or the reagent container 23 installed in the installation table 211. However, the position detector may have another configuration.

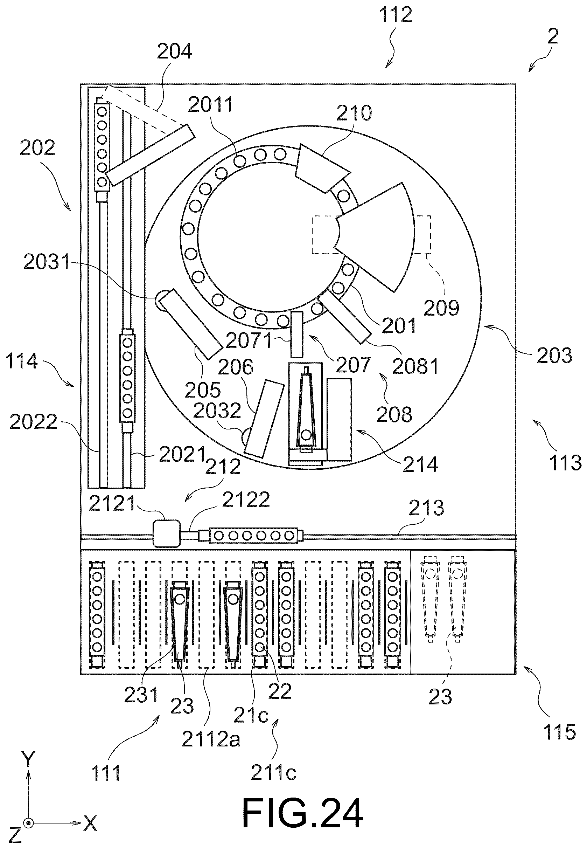

FIG. 24 is a diagram illustrating an example of a configuration of an analysis mechanism 2 according to the third modification, and is a diagram corresponding to FIG. 20. As illustrated in FIG. 24, the position detector 2112a according to the third modification detects the installation position of the sample rack 21c or the reagent container 23 installed in the installation table 211c by detecting the pressure caused by installing the sample rack 21c or the reagent container 23 in the installation table 211c. The position detector 2112a according to the third modification is, for example, a pressure sensor. As illustrated in FIG. 24, the position detector 2112a according to the third modification is provided in the slot bottom portion 2111_3. Specifically, the pressure sensor as the position detector 2112a is provided on the entire surface of the slot bottom portion 2111_3. Therefore, when the sample rack 21c or the reagent container 23 is installed in the slot 2111_1, the detection result of the pressure sensor corresponding to the installation position of the sample rack 21c or the reagent container 23 can be acquired, and the installation position of the sample rack 21c or the reagent container 23 can be detected. The detection result of the position detector 2112a is output to the control circuitry 9.

As described above, also in the configuration of the analysis mechanism 2 according to the third modification, the installation position of the sample rack 21c or the reagent container 23 installed in the installation table 211c can be detected.

### [Fourth Embodiment]

In the automatic analyzing apparatus 1 according to the first to third embodiments described above, whether the sample rack 21 or the reagent container 23 is installed in the installation table 211 is determined by the user inputting identification information for identifying the sample rack 21 or the reagent container 23 via the input interface 5 before installing the sample rack 21 or the reagent container 23, but the present invention is not limited thereto. In the automatic analyzing apparatus 1 according to the fourth embodiment, the reader may read the rack identification information provided in the sample rack 21 or the reagent container identification information provided in the reagent container 23 to identify which one of the sample rack 21 and the reagent container 23 is installed in the installation table 211. A case in which this modification is applied to the first embodiment will be referred to as a fourth embodiment, and portions different from those of the above-described first embodiment will be described. Note that this modification can also be applied to the second and third embodiments.

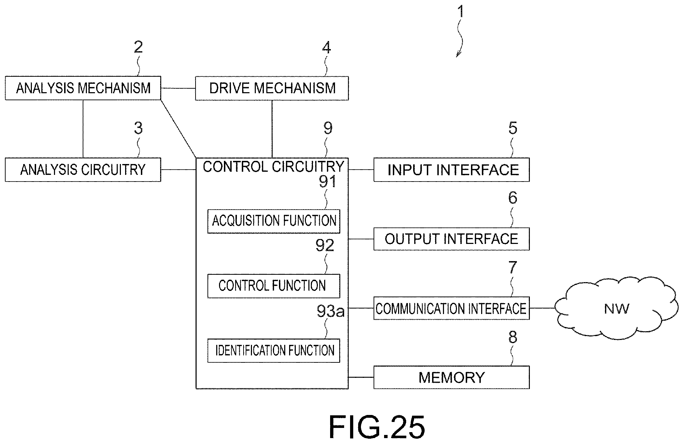

FIG. 25 is a block diagram illustrating an example of a functional configuration of the automatic analyzing apparatus 1 according to the fourth embodiment, and is a diagram corresponding to FIG. 1. As illustrated in FIG. 25, in the automatic analyzing apparatus 1 according to the present embodiment, the identification function is different from that of the automatic analyzing apparatus 1 according to the first embodiment, and thus is denoted as an identification function 93a. Functions and configurations other than the identification function 93a are the same as those in FIG. 1 described above, and thus description thereof is omitted.

The identification function 93a according to the present embodiment identifies which one of the sample rack 21 and the reagent container 23 is installed in the installation table 211 based on a reading result of the reader to be described later.

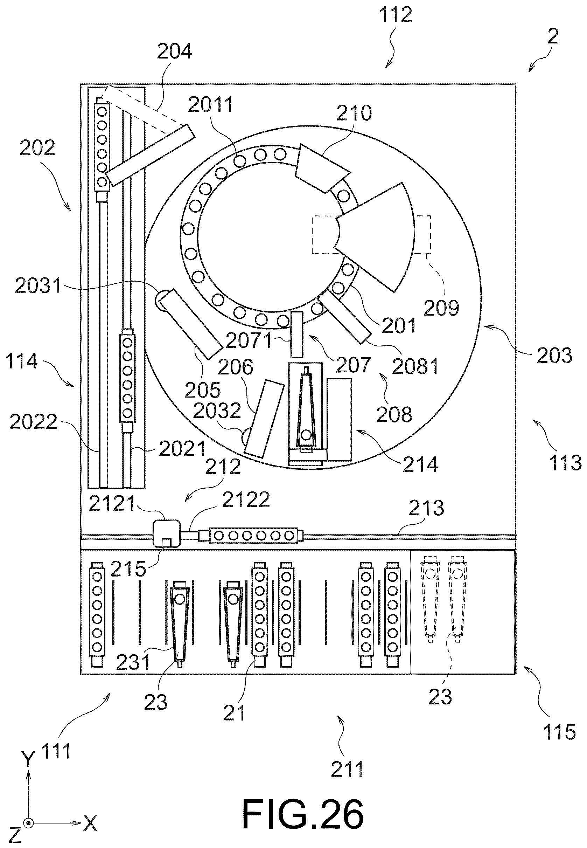

FIG. 26 is a diagram illustrating an example of a configuration of an analysis mechanism 2 according to the fourth embodiment, and is a diagram corresponding to FIG. 2. As illustrated in FIG. 26, the automatic analyzing apparatus 1 according to the present embodiment is configured to additionally include a reader 215 as compared with the automatic analyzing apparatus 1 according to the first embodiment. Configurations other than the reader 215 are the same as those in FIG. 2 described above, and thus description thereof is omitted.

The reader 215 reads the rack identification information and the reagent container identification information. Specifically, the reader 215 reads the rack identification information of the sample rack 21 installed in the installation table 211 or the reagent container identification information of the reagent container 23. The reading result of the reader 215 is output to the control circuitry 9. In the present embodiment, the reader 215 is provided in the transporter 212, and moves as the transporter 212 moves along the transporter track 213.

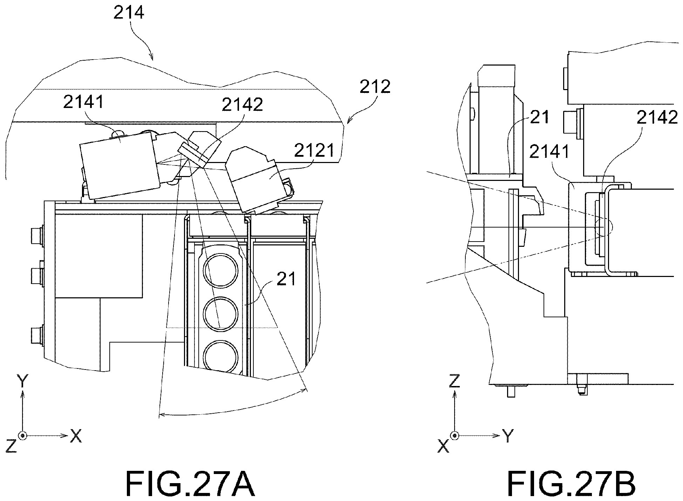

FIG. 27 is a diagram illustrating a configuration of the reader 215 and a positional relationship among the reader 215, the transporter 212, and the sample rack 21. FIG. 27A is a diagram of the positional relationship among the reader 215, the holding arm 2122 in the transporter 212, and the sample rack 21 as viewed from above, and FIG. 27B is a diagram of the positional relationship among the reader 215, the holding arm 2122 in the transporter 212, and the sample rack 21 as viewed from the side. As illustrated in FIG. 27A, the reader 215 includes a reader body 2151 and a reflector 2152.

The reader body 2151 is a device that reads rack identification information and reagent container identification information. In the present embodiment, the reader body 2151 includes a barcode reader body for reading a barcode constituting the rack identification information and the reagent container identification information. Note that the reader body 2151 is not limited to a case of being configured by a barcode reader body. That is, the configuration of the reader body 2151 is optional, and the reader body 2151 may be configured by a reader body that reads a pixel code, a reader body that reads an IC tag, or the like according to the configuration of the rack identification information and the reagent container identification information.

The reflector 2152 is a member that constitutes an optical path between the rack identification information of the sample rack 21 installed in the installation table 211 or the reagent container identification information of the reagent container 23 installed in the installation table 211 and the reader body 2151. The reflector 2152 is, for example, a mirror.

As illustrated in FIGS. 27A and 27B, in a case where the reader body 2151 is a barcode reader body, the reflector 2152 reflects the emitted light beam emitted from the reader body 2151, hits the rack identification information of the sample rack 21, and causes the reflected light beam to be incident on the reader body 2151, and thereby the reader body 2151 reads the rack identification information of the sample rack 21. Therefore, as illustrated in FIGS. 27A and 27B, the reflector 2152 reflects the emitted light from the reader body 2151 such that the barcode constituting the rack identification information of the sample rack 21 is included in the reading range of the reader body 2151.

As illustrated in FIG. 27A, in the present embodiment, when the reader 215 reads the rack identification information of the sample rack 21 or the reagent container identification information of the reagent container 23 installed in the installation table 211, the holding arm 2122 in the transporter 212 is retracted to the retracted position that is a position not interfering with the irradiation range of the emitted light from the reader body 2151. Then, when the reader 215 completes reading the rack identification information or the reagent container identification information, the holding arm 2122 in the transporter 212 moves to a standby position that is a position facing the sample rack 21 or the reagent container 23 installed in the installation table 211.

Note that the reader 215 includes the reflector 2152, but the reflector 2152 may not necessarily be included. In this case, when the transporter 212 moves to the position of the sample rack 21 or the reagent container 23 installed in the installation table, the reader body 2151 may be provided at a position where the rack identification information of the sample rack 21 or the reagent container identification information of the reagent container 23 is included in the reading range of the reader body 2151. Furthermore, although the reader 215 is provided in the transporter 212, the reader 215 may be provided independently of the transporter 212. In this case, the reader 215 may be attached to a moving mechanism for moving the reader 215 and moves.

As described above, since the automatic analyzing apparatus 1 according to the fourth embodiment includes the reader 215 that reads the rack identification information and the reagent container identification information, it is possible to identify which one of the sample rack 21 and the reagent container 23 is installed in the installation table 211 without the user inputting identification information for identifying the sample rack 21 and the reagent container 23 via the input interface 5. Therefore, the usability can be prevented from being impaired in the automatic analyzing apparatus including the installation table for installing the sample rack and the reagent container.

### [Fifth Embodiment]

In the automatic analyzing apparatus 1 according to the first to third embodiments described above, whether the sample rack 21 or the reagent container 23 is installed in the installation table 211 is determined by the user inputting identification information for identifying the sample rack 21 or the reagent container 23 via the input interface 5 before installing the sample rack 21 or the reagent container 23, but the present invention is not limited thereto. In the automatic analyzing apparatus 1 according to the fifth embodiment, each of the plurality of slots 2111_1 in the tray 2111 of the installation table 211 may be divided into a region where the sample rack 21 is installed and a region where the reagent container 23 is installed, so that which one of the sample rack 21 and the reagent container 23 is installed in the installation table 211 may be identified from the information on the place of the installed slot 2111_1. Hereinafter, differences from the first embodiment will be described. Note that this modification can also be applied to the second and third embodiments.

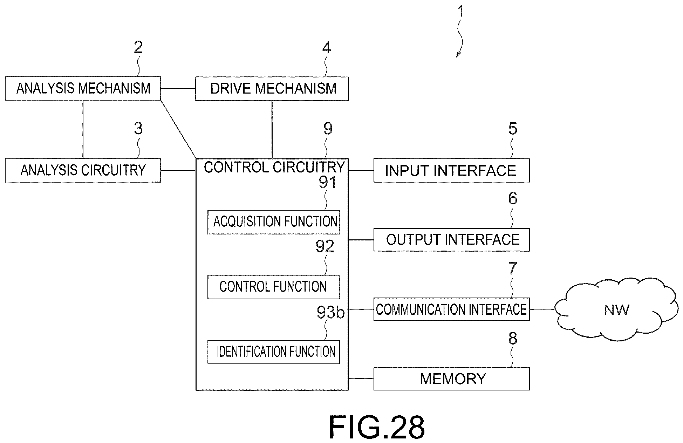

FIG. 28 is a block diagram illustrating an example of a functional configuration of the automatic analyzing apparatus 1 according to the fifth embodiment, and is a diagram corresponding to FIG. 1. As illustrated in FIG. 28, in the automatic analyzing apparatus 1 according to the present embodiment, the identification function is different from that of the automatic analyzing apparatus 1 according to the first embodiment, and thus is denoted as an identification function 93b. Functions and configurations other than the identification function 93b are the same as those in FIG. 1 described above, and thus description thereof is omitted.

The identification function 93b according to the present embodiment identifies which one of the sample rack 21 and the reagent container 23 is installed in an installation table 211d based on a detection result of a first sensor or a detection result of a second sensor described later.

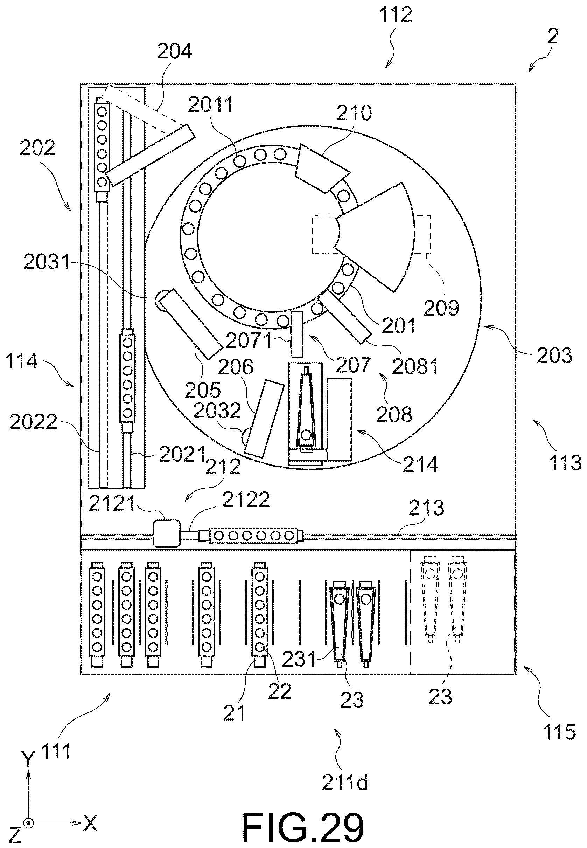

FIG. 29 is a diagram illustrating an example of a configuration of an analysis mechanism 2 according to the fifth embodiment, and is a diagram corresponding to FIG. 2. As illustrated in FIG. 29, in the automatic analyzing apparatus 1 according to the present embodiment, the installation table is different from that of the automatic analyzing apparatus 1 according to the first embodiment, and thus is denoted as the installation table 211d. Configurations other than the installation table 211d are the same as those in FIG. 2 described above, and thus description thereof is omitted.

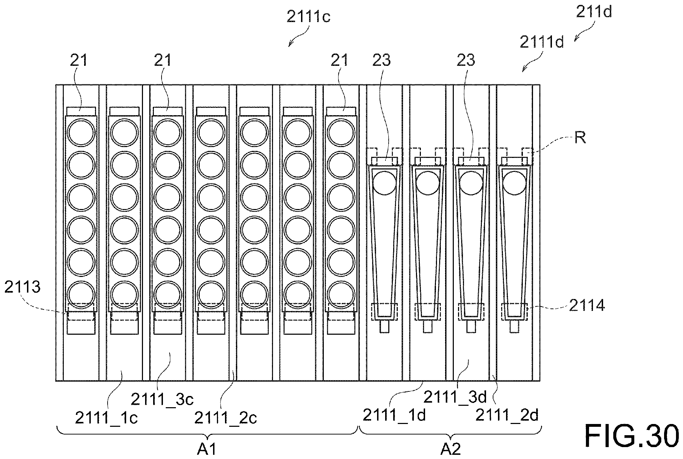

FIG. 30 is a diagram of the installation table 211d according to the fifth embodiment as viewed from above, and is a diagram corresponding to FIG. 3. As illustrated in FIG. 30, the installation table 211d according to the present embodiment includes a first tray 2111c for installing the sample rack 21 and a second tray 2111d for installing the reagent container. As illustrated in FIG. 30, the installation table 211d according to the present embodiment includes a first sensor 2113 for detecting that the sample rack 21 is installed on the first tray 2111c, and a second sensor 2114 for detecting that the reagent container 23 is installed on the second tray 2111d. In addition, the restrictor R is not provided in left and right walls 2111_2c of the slot 2111_1c in the first tray 2111c corresponding to an area A1 illustrated in FIG. 30, and the restrictor R is provided in left and right walls 2111_2d of the slot 2111_1d corresponding to an area A2. That is, the slot 2111_1c corresponding to the area A1 is a slot dedicated to the sample rack 21, and the sample rack 21 is installed. In addition, the slot 2111_1d corresponding to the area A2 is a slot dedicated to the reagent container, and the reagent container 23 is installed. When the sample rack 21 or the reagent container 23 is installed in the installation table 211d, the identification function 93b may identify which one of the sample rack 21 and the reagent container 23 is installed based on the detection result of the first sensor 2113 or the detection result of the second sensor 2114.

As described above, in the automatic analyzing apparatus 1 according to the fifth embodiment, the installation table 211d includes the first tray 2111c for installing the sample rack 21 and the second tray 2111d for installing the reagent container 23, and includes the first sensor 2113 for detecting that the sample rack 21 is installed in the first tray 2111c and the second sensor 2114 for detecting that the reagent container 23 is installed in the second tray 2111d. Therefore, the identification function 93b can identify which one of the sample rack 21 and the reagent container 23 is installed in the installation table 211 without the user inputting identification information for identifying the sample rack 21 and the reagent container 23 via the input interface 5, and thereby the usability can be prevented from being impaired in the automatic analyzing apparatus including the installation table for installing the sample rack and the reagent container.

### [Other Modifications]

In the automatic analyzing apparatus 1 according to the first to fifth embodiments, the first modification, and the second modification, the reader 215 has been described as reading the rack identification information and the reagent container identification information, but the present invention is not limited thereto. For example, the sample rack 21 may be provided with information indicating only that it is a sample rack instead of the rack identification information or in addition to the rack identification information, and the reagent container 23 may be provided with information indicating only that it is a reagent container instead of the reagent container identification information or in addition to the reagent container identification information, and the reader 215 may be configured to read the "information indicating only that it is a sample rack" or the "information indicating only that it is a reagent container". That is, the first additional information may be information indicating the sample rack 21, and the second additional information may be information indicating only the reagent container 23.

In addition, in the automatic analyzing apparatus 1 according to the first to fifth embodiments, the first modification, and the second modification described above, application to an automatic analyzing apparatus that performs biochemical test has been described, but the present invention is not limited thereto. That is, the first to third embodiments can be applied to any of an automatic analyzing apparatus that performs a blood coagulation analysis test, an automatic analyzing apparatus that performs an immunological test, and an automatic analyzing apparatus that performs any two or more of a biochemical test, a blood coagulation analysis test, and an immunological test.

Note that the word "processor" used in above descriptions means circuits such as, for example, a Central Processing Unit (CPU), a Graphics Processing Unit (GPU), an Application Specific Integrated Circuit (ASIC), a programmable logic device (for example, a Simple Programmable Logic Apparatus (SPLD), a Complex Programmable Logic Apparatus (CPLD), and a Field Programmable Gate Array (FPGA)). The processor executes functions by reading and executing programs stored in the memory 8. Note that programs may be configured to be directly integrated in the processor instead of being storing in the memory 8. In this case, the processor realizes functions by reading and executing programs stored in the circuitry. Note that the processor is not limited to the case arranged as a single processor circuit, but may be configured as a single processor by combining a plurality of independent circuits to realize functions. Furthermore, a plurality of component elements in Fig.1 may be integrated into one processor to realize the functions.

According to at least one embodiment described above, the usability can be prevented from being impaired in the automatic analyzing apparatus including the installation table for installing the sample rack and the reagent container.

While certain embodiments have been described, these embodiments have been presented by way of example only and are not intended to limit the scope of the inventions. The embodiments may be in a variety of other forms. Furthermore, various omissions, substitutions and changes may be made without departing from the scope of the inventions as defined by the appended claims. The embodiments and their modifications are included in the scope and the subject matter of the invention, and at the same time included in the scope of the claimed inventions.

## Claims

1. An automatic analyzing apparatus comprising:
an installation table configured to install a specimen rack and a reagent container, the specimen rack holding a specimen container for containing a specimen and the reagent container containing a reagent used for measurement; and
a transporter configured to hold and transport the specimen rack or the reagent container installed in the installation table,
wherein the installation table includes a restrictor that restricts an installation position of an object installed on the installation table when a type of the object is a predetermined type including at least one of the specimen rack and the reagent container.

2. The automatic analyzing apparatus of claim 1, wherein
the predetermined type is the reagent container, and
the restrictor restricts an installation position of the reagent container when the reagent container is installed in the installation table.

3. The automatic analyzing apparatus of claim 2, wherein
the restrictor does not restrict an installation position of the specimen rack when the specimen rack is installed in the installation table.

4. The automatic analyzing apparatus of claim 1, wherein the specimen rack in which a cutout is formed is installed in the installation table.

5. The automatic analyzing apparatus of claim 1, wherein
the specimen rack installed in the installation table is either a first specimen rack or a second specimen rack, the second specimen rack being smaller in size than the first specimen rack,
the predetermined type includes the reagent container and the second specimen rack, and
the restrictor restricts an installation position of the reagent container and an installation position of the second specimen rack when the reagent container and the second specimen rack are installed in the installation table.

6. The automatic analyzing apparatus of claim 1, wherein
the installation table includes a tray having a plurality of slots for receiving the specimen rack and the reagent container and a wall for partitioning adjacent slots, and
the restrictor is provided on the wall.

7. The automatic analyzing apparatus of claim 6, wherein
in the installation table, the specimen rack and the reagent container are installed so as to be aligned with a user side of the tray.

8. The automatic analyzing apparatus of claim 1, further comprising:
a reader configured to read rack identification information assigned to the specimen rack and reagent container identification information assigned to the reagent container; and
processing circuitry configured to identify which one of the specimen rack and the reagent container is installed in the installation table based on a reading result of the reader.

9. The automatic analyzing apparatus of claim 1, further comprising:
an input interface configured to receive an input of information on the specimen rack or the reagent container from the user, and
processing circuitry configured to identify which one of the specimen rack and the reagent container is installed in the installation table based on information on the specimen rack or the reagent container that has received the input from the user via the input interface.

10. The automatic analyzing apparatus of claim 1, further comprising:
a first sensor configured to detect installation of the specimen rack in a first tray for installing the specimen rack included in the installation table;
a second sensor configured to detect installation of a reagent container in a second tray for installing the reagent container included in the installation table; and
processing circuitry configured to identify which one of the specimen rack and the reagent container is installed in the installation table based on a detection result of the first sensor or a detection result of the second sensor.
